(19)

Europäisches
Patentamt
European
Patent Office
Office européen
des brevets

(11) **EP 3 879 610 A1**

(12) **EUROPEAN PATENT APPLICATION**
published in accordance with Art. 153(4) EPC

(43) Date of publication:
**15.09.2021 Bulletin 2021/37**

(21) Application number: **19882431.0**

(22) Date of filing: **26.04.2019**

(51) Int Cl.:
**H01M 4/62** (2006.01)

(86) International application number:
**PCT/JP2019/018068**

(87) International publication number:
**WO 2020/095466 (14.05.2020 Gazette 2020/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.11.2018 PCT/JP2018/041402**

(71) Applicants:
• **TPR CO., LTD.**
**Tokyo 100-0005 (JP)**

• **iElectrolyte Co., Ltd.**
**Suita-shi**
**Osaka 5650842 (JP)**

(72) Inventors:
• **SOEDA, Kazunari**
**Suita-shi, Osaka 565-0842 (JP)**
• **TAKAHASHI, Takuya**
**Suita-shi, Osaka 565-0842 (JP)**

(74) Representative: **Vidon Brevets & Stratégie**
**16B, rue de Jouanet**
**BP 90333**
**35703 Rennes Cedex 7 (FR)**

(54) **BINDER**

(57) Provided is a binder that makes it possible to prepare a slurry for an electrode with use of water as a solvent and without causing alkalinization of the slurry for the electrode, even in a case where an electrode active material that is highly prone to hydrolysis is used. The binder contains: a pH adjustment functional agent which neutralizes a base in an aqueous system; and a metal-crosslinking thickening agent forming a hydrophobic gel by being crosslinked, in the aqueous system, via metal ions derived from an electrode active material.

FIG. 1

(a)

Voltage/V — Capacity/mAh g−1

(b)

Voltage/V — Capacity/mAh g−1

Product of the present invention

PVdF

EP 3 879 610 A1

**Description**

Technical Field

The present invention relates to a binder which connects electrode materials of an electrochemical device.

Background Art

Recently, electrochemical devices (examples of which include electricity storage devices such as electrochemical capacitors and lithium-ion secondary batteries), which are to be mounted on, for example, mobile phones and electric vehicles, are under development. Among others, lithium-ion secondary batteries have an excellent charge-discharge efficiency and a high energy density, and make it possible to reduce the size and the weight of devices. Accordingly, lithium-ion secondary batteries are used as power sources for, for example, mobile devices, laptop personal computers, and domestic electric appliances, and further for hybrid vehicles and electric vehicles. Furthermore, lithium-ion secondary batteries are newly drawing attention as electricity storage devices which may be used for storage of generated electricity in combination with a natural energy system such as photovoltaic power generation or wind power generation.

Electrodes included in an electrochemical device are each composed of: an electrode active material directly involved in storage of electric energy; a conductive auxiliary agent that serves as a conductive path between active material particles; a binder; a current collector; and/or the like. The characteristics of the electrochemical device greatly depend on what electrodes are used, and are greatly affected by the characteristics of each material itself and what materials are combined.

Recently, research has been conducted on use of an electrode active material which is highly reactive with water (for example, layered metal oxide-based active material) in order to produce an electrochemical device that has large capacity and superior charge-discharge cycle characteristics. Furthermore, use of an aqueous binder in production of a slurry for an electrode (i.e., slurry which contains the electrode active material, a conductive auxiliary agent, and the binder) is under consideration, for example, because of cost and safety and because such a binder is easy to manage.

However, usually, the electrode active material which is highly reactive with water undergoes hydrolysis and deteriorates during preparation of the slurry for the electrode. In a case where the electrode active material deteriorates, the capacity and charge-discharge cycle characteristics of an electrochemical device decrease, and heat resistance is also lost. Also, the hydrolysis leads to alkalinization of the slurry for the electrode and results in corrosion of a current collector.

In such circumstances, in order to prevent the alkalinization of the slurry for the electrode, an attempt has been made to use an aqueous binder which contains proton within a system (Patent Literature 1).

On the other hand, in recent years, with the expansion of uses of lithium-ion secondary batteries and the like, there is an increasing demand for an improvement in electrode capacity. As an active material capable of addressing the demand, an active material which contains nickel at high concentration (hereinafter may be referred to as "high-nickel active material") has been attracting attention. It is estimated that an increased amount of such a high-nickel active material will be used in the future.

Citation List

[Patent Literature]

[Patent Literature 1] International Publication No. WO 2016/052715 (Publication Date: April 7, 2016)

Summary of Invention

Technical Problem

However, the high-nickel active material is very highly reactive with water, and therefore undergoes hydrolysis very quickly in the presence of water. This results in the following issues: the slurry for the electrode becomes strongly alkaline (having a pH of about 12) and turns into a gel state, and therefore cannot be applied to a current collector; and such a strongly alkaline slurry causes corrosion of the current collector.

To address such issues, under present circumstances, a slurry for an electrode which contains the high-nickel active material is prepared with use of an organic solvent and a fluorine resin-based binder. Furthermore, in the preparation of the slurry for the electrode, a weak acid such as oxalic acid and/or acetic acid is used as a neutralizer to deal with alkalis that would be generated by the entrance of water into the organic solvent.

However, the use of an organic solvent is not preferred in terms of safety, effects on the environment, handleability, and the like. Furthermore, a solvent for use in the preparation of the slurry is hydrophilic in many cases; therefore, even in a case where an organic solvent is used, the hydrolysis of the high-nickel active material can occur if moisture in the air enters the organic solvent. Thus, the preparation needs to be carried out in a special dry environment.

In addition, the fluorine resin-based binder is greatly affected by even a slight amount of moisture entering during the production of a battery. Specifically, the fluorine resin-based binder may lose its binder function during charging/discharging operations because, during the operations, the fluorine resin-based binder reacts with an alkali generated by the hydrolysis of the high-nickel active material and is defluoridated. Furthermore, the use of the weak acid is not preferred, because the weak acid and the electrode active material react with each other and thereby accelerate the deterioration of the electrode active material.

For such reasons, in order to ensure excellent battery performance, there is a demand for a technique that uses water as a solvent and that makes it possible to produce an electrode without causing alkalinization of the slurry for the electrode, even in a case where the high-nickel active material is used.

Patent Literature 1 discloses a binder which contains an alginic acid (Alg-H) (which is acidic form) as a main component. The binder is capable of preventing the deterioration of an electrode active material by neutralizing a base in a slurry for an electrode. The deterioration of the electrode active material in an aqueous system can usually be prevented by the binder.

In a case of preparing a slurry for an electrode in an aqueous system with use of the above binder (containing Alg-H as a main component) and the high-nickel active material, it is at least possible to neutralize a base in the slurry for the electrode. However, the high-nickel active material is highly reactive with water, and therefore the following issue can occur: water molecules formed in the neutralization react with the high-nickel active material, and the hydrolysis does not stop.

Thus, the binder disclosed in Patent Literature 1 still has some room for improvement in terms of a reduction in deterioration of the high-nickel active material.

An aspect of the present invention was made in view of the above issues, and an object thereof is to provide a binder that makes it possible to prepare a slurry for an electrode with use of water as a solvent and without causing alkalinization of the slurry for the electrode, even in a case where an electrode active material that is highly prone to hydrolysis is used.

Solution to Problem

In order to attain the above object, the inventors of the present application have made diligent studies. As a result, the inventors have found that the above object can be attained by using a binder which contains a pH adjustment functional agent and a metal-crosslinking thickening agent. The inventors thereby accomplished the present invention. Specifically, the present invention encompasses the following aspects.

[1] A binder which connects electrode materials of an electrochemical device, the binder including: a pH adjustment functional agent which neutralizes a base in an aqueous system; and a metal-crosslinking thickening agent forming a hydrophobic gel by being crosslinked, in the aqueous system, via metal ions derived from an electrode active material.

[2] The binder as described in [1], wherein the pH adjustment functional agent is at least one compound selected from the group consisting of: gluconates; alkali metal phosphates, and alkali metal citrates; dicarboxylic acids and salts thereof; oxoacids which are weakly acidic, and salts thereof; hydroxy acids and salts thereof; and alginic acids (Alg-H), the alginic acids (Alg-H) being alginic acids in which a carbonyl group is not bound to any cation except for a proton.

[3] The binder as described in [1] or [2], wherein the metal-crosslinking thickening agent is at least one compound selected from the group consisting of water-soluble alginates, alginic acid esters, karaya gum, carrageenan, pectin, gellan gum, glucomannan, locust bean gum, xanthan gum, glucose, carboxymethyl starch, carboxymethyl cellulose and a salt thereof, hydroxyethyl cellulose, hydroxypropyl methylcellulose, mannose, galactose, arabinose, fucose, ribose, fructose, dextran, and hyaluronic acid.

[4] The binder as described in any one of [1] to [3], wherein the binder includes the pH adjustment functional agent in an amount of not less than 15 mass% and not more than 95 mass% and the metal-crosslinking thickening agent in an amount of not less than 5 mass% and not more than 85 mass%, the total mass of the pH adjustment functional agent and the metal-crosslinking thickening agent being 100 mass%.

[5] The binder as described in any one of [1] to [4], wherein the electrode active material is an alkali metal complex oxide.

[6] The binder as described in [5], wherein the alkali metal complex oxide is a complex oxide whose composition is represented by $Li_{1+u}Ni_{1-x-y-z}Co_xMn_yM_zO_2$, where M is at least one element selected from the group consisting of Fe, V, Mg, Al, Ti, Mo, Nb, Zr, and W, and where

$-0.05 \leq u \leq 0.50$,
$0 \leq x \leq 0.35$,
$0 \leq y \leq 0.35$,
$0 \leq z \leq 0.1$, and
$0 \leq x+y+z \leq 0.7$.

[7] A binder-containing liquid including: a binder as described in any one of [1] to [6]; and water or a water-containing hydrophilic organic solvent.

[8] A binder-containing liquid including: a binder as described in any one of [1] to [6]; an emulsion of a polyacrylic acid copolymer resin, an emulsion of a styrene-butadiene copolymer rubber, or an emulsion of a fluorine-containing copolymer; and water.

[9] The binder-containing liquid as set forth in [7] or [8], further including a conductive auxiliary agent.

[10] A composition including: a binder as described in any one of [1] to [6]; and a polyacrylic acid copolymer resin, a styrene-butadiene copolymer rubber, or a fluorine-containing copolymer.

[11] The composition as described in [10], further including a conductive auxiliary agent.

[12] A slurry for an electrode, including: a binder as described in any one of [1] to [6]; an electrode active material; a conductive auxiliary agent; and water.

[13] The slurry for an electrode as described in [12], which has a solid content concentration of not less than 30 mass% and less than 100 mass%.

[14] An electrode for an electrochemical device, including: a binder as described in any one of [1] to [6]; or a composition as described in [10] or [11].

[15] An electrochemical device including: a positive electrode; a negative electrode; and an electrolyte between the positive electrode and the negative electrode,

the positive electrode and/or the negative electrode being an electrode for an electrochemical device as described in [14].

[16] The electrochemical device as described in [15], wherein the electrochemical device is a lithium-ion secondary battery.

Advantageous Effects of Invention

A binder in accordance with an embodiment of the present invention makes it possible, even in a case where an electrode active material is a high-nickel active material, to prevent hydrolysis of the electrode active material and to maintain the pH of a slurry for an electrode at or near neutral pH, by the effect of buffering the pH of the slurry for the electrode. Such characteristics provide the following effect: it is possible to prevent deterioration of the electrode active material even in an aqueous system, and to provide an electrochemical device which is highly thermally stable, highly voltage resistant, and highly safe.

Brief Description of Drawings

Fig. 1 shows charge and discharge curves with regard to a lithium-ion secondary battery 1 used in Example 2, in a case where NMC532 is used as a positive electrode active material.

Fig. 2 shows charge and discharge curves with regard to the lithium-ion secondary battery 1 used in Example 2, in a case where NMC622 is used as the positive electrode active material.

Fig. 3 shows charge and discharge curves with regard to the lithium-ion secondary battery 1 used in Example 2, in a case where NMC811 is used as the positive electrode active material.

Fig. 4 shows charge and discharge curves with regard to the lithium-ion secondary battery 1 used in Example 2, in a case where NCA is used as the positive electrode active material.

Fig. 5 is a chart showing the results obtained by examining cycle characteristics at high temperature of a lithium-ion secondary battery in accordance with an embodiment of the present invention in Example 3.

Fig. 6 is a chart showing the results obtained by examining high-voltage endurance (endurance to high voltage) of a lithium-ion secondary battery in accordance with an embodiment of the present invention in Example 4.

Description of Embodiments

The following description will discuss details of embodiments of the present invention. The scope of the present invention is, however, not limited to the description of the embodiments. Besides the examples below, the present invention can also be modified and put into practice as appropriate within the scope in which the purpose of the present invention is not impaired.

Note that in the present specification, any numerical range expressed as "A to B" means "not less than A and not more than B" unless otherwise stated. Further, the terms "mass" and "weight" are regard as synonyms. Also, the terms "mass%" and "weight%" are regard as synonyms.

[1. Binder]

A binder in accordance with an embodiment of the present invention is a binder which connects electrode materials of an electrochemical device. The binder contains: a pH adjustment functional agent which neutralizes a base in an aqueous system; and a metal-crosslinking thickening agent forming a hydrophobic gel by being crosslinked, in the aqueous system, via metal ions derived from an electrode active material.

The binder serves to connect electrode materials such as an electrode active material, a current collector, and a conductive auxiliary agent. The binder in accordance with an embodiment of the present invention not only serves to function as described above, but also prevents the hydrolysis of the electrode active material (such as a high-nickel active material) in an aqueous system (such as a water-containing slurry for an electrode) and maintains the pH of the aqueous system at or near neutral pH. The binder in accordance with an embodiment of the present invention thus makes it possible to provide an electrochemical device that is excellent in discharge capacity characteristics maintenance ratio, heat resistance, and the like. The following description first discusses components contained in a binder in accordance with an embodiment of the present invention.

(1. pH adjustment functional agent)

The binder in accordance with an embodiment of the present invention contains a pH adjustment functional agent which neutralizes a base in an aqueous system. In the aqueous system, metal ions derived from an electrode active material may be eluted into a slurry for an electrode, due to hydrolysis of the electrode active material. When this occurs, the pH of the slurry for the electrode may become alkaline.

The "metal ions derived from an electrode active material" means metal ions which may be generated from the electrode active material. The term "aqueous system" as used in the present specification means an environment in which water is present. The "aqueous system" is, for example, a water-containing environment such as a slurry for an electrode in accordance with an embodiment of the present invention (described later). The aqueous system is preferably an environment which is free of organic solvents; however, the aqueous system may be an environment which contains (i) water and (ii) an organic solvent that can be mixed with water at any mixing ratio. Examples of such an organic solvent include: N-methyl-2-pyrrolidone; dimethyl sulfoxide; and alcohols such as methanol, ethanol, propanol, isopropanol, n-butanol, and t-butanol. One of such organic solvents may be used or two or more of such organic solvents may be used. Note that the electrode active material may be a positive electrode active material, a negative electrode active material, or both of them.

During and after the production of an electrode active material, lithium carbonate, lithium hydroxide, or the like, each of which is a raw material for the electrode active material and includes a base that contains Li and the like, may be attached on the surface of the electrode active material. In such cases, the raw material undergoes hydrolysis and thereby the base is eluted into the slurry for the electrode, making the pH of the slurry for the electrode alkaline.

The causes of the attachment of the raw material on the surface of the electrode active material are, for example, as follows.

1: When the raw material is heated during the production of the electrode active material, the heating is insufficient and therefore the raw material remains unreacted.
2: After the production of the electrode active material, while the electrode active material is in storage, the electrode active material reacts with moisture and/or oxygen in the air and a slight amount of particles of the electrode active material are decomposed, and thereby lithium carbonate, lithium hydroxide, or the like is formed on the surface of the particles of the electrode active material.

There is a concern that, because aluminum foil serving as an electrode substrate (current collector) is susceptible to corrosion by a base, if the pH control is insufficient, battery characteristics will decrease because of the corrosion. To address such a concern, the binder in accordance with an embodiment of the present invention contains the pH adjustment functional agent. The pH adjustment functional agent neutralizes the base in an aqueous system. This makes it possible to prevent an increase in pH of a slurry for an electrode in which the binder is contained, and prevent the pH from becoming alkaline. This, in turn, makes it possible to prevent the corrosion of the aluminum foil.

Furthermore, the pH adjustment functional agent, which co-exists with the foregoing metal-crosslinking thickening agent in the binder, is thereby capable of providing the effect of buffering the pH of the slurry for the electrode in an aqueous system (described later). This makes it possible to maintain the pH of the slurry for the electrode at or near neutral pH.

The phrase "neutralize a base in an aqueous system" means that the pH adjustment functional agent is capable of neutralizing the base at least in an aqueous system, and does not mean that the pH adjustment functional agent is capable of neutralizing the base only in an aqueous system.

The pH adjustment functional agent is not particularly limited, provided that the pH adjustment functional agent is capable of neutralizing the base in an aqueous system. Examples of the pH adjustment functional agent include: gluconates such as potassium gluconate and sodium gluconate; alkali metal phosphates such as disodium phosphate ($Na_2HPO_4$), sodium polyphosphates (e.g., $Na_5P_3O_{10}$, $Na_6P_4O_{13}$), and sodium metaphosphates (e.g., $(NaPO_3)n$); alkali metal citrates such as monosodium citrate and disodium citrate; dicarboxylic acids such as malonic acid, succinic acid, and glutaric acid, and salts thereof; oxoacids which are weakly acidic such as monosodium phosphate ($NaH_2PO_4$), monopotassium phosphate ($KH_2PO_4$), orthosilicic acid, metasilicic acid, and metadisilicic acid, and salts thereof; hydroxy acids such as glycolic acid, lactic acid, and malic acid, and salts thereof; and alginic acids (Alg-H) in which a carbonyl group is not bound to any cation except for a proton. One of such pH adjustment functional agents may be used alone or two or more of such pH adjustment functional agents may be used in combination. The pH adjustment functional agent may be an anhydride or may contain crystal water.

The "oxoaicds which are weakly acidic" are preferably oxoacids having n = 0 or n = 1 in the second rule of Pauling's rules. Further, the lactic acid and the malic acid each can be a D-form, an L-form, or a DL-form.

The pH adjustment functional agent is contained in an amount of preferably not less than 15 mass%, more preferably not less than 20 mass%, where 100 mass% represents the total mass of the pH adjustment functional agent and the metal-crosslinking thickening agent contained in the binder in accordance with an embodiment of the present invention. On the other hand, the pH adjustment functional agent is contained in an amount of preferably not more than 95 mass%, more preferably not more than 90 mass%, where 100 mass% represents the total mass of the pH adjustment functional agent and the metal-crosslinking thickening agent contained in the binder in accordance with an embodiment of the present invention.

(2. Metal-crosslinking thickening agent)

The binder in accordance with an embodiment of the present invention contains a metal-crosslinking thickening agent, which forms a hydrophobic gel by being crosslinked, in an aqueous system, via metal ions derived from an electrode active material. The "metal-crosslinking thickening agent" in the present specification means a substance having a nature with which the metal-crosslinking thickening agent (i) increases in viscosity as a result of being crosslinked via the metal ions in the aqueous system and (ii) binds to metal and forms a hydrophobic gel.

The metal-crosslinking thickening agent is not particularly limited, provided that the metal-crosslinking thickening agent has the above-described nature. Examples of the metal-crosslinking thickening agent include: water-soluble alginates, alginic acid esters, karaya gum, carrageenan, pectin, gellan gum, glucomannan, locust bean gum, xanthan gum, glucose, carboxymethyl starch, carboxymethyl cellulose and a salt thereof, hydroxyethyl cellulose, hydroxypropyl methylcellulose, mannose, galactose, arabinose, fucose, ribose, fructose, dextran, and hyaluronic acid.

Examples of the water-soluble alginates include lithium salt (lithium alginate), sodium salt (sodium alginate), potassium salt (potassium alginate), magnesium salt (magnesium alginate), and mercury salt (mercury alginate). One of such metal-crosslinking thickening agents may be used or two or more of such metal-crosslinking thickening agents may be used in combination.

The amount of the metal-crosslinking thickening agent contained in the binder in accordance with an embodiment of the present invention is preferably not less than 5 mass%, more preferably not less than 10 mass%, where 100 mass% represents the total mass of the pH adjustment functional agent and the metal-crosslinking thickening agent contained in the binder. The amount of the metal-crosslinking thickening agent contained in the binder in accordance with an embodiment of the present invention is preferably not more than 85 mass%, more preferably not more than 50 mass%, where 100 mass% represents the total mass of the pH adjustment functional agent and the metal-crosslinking thickening agent contained in the binder.

Examples of an aspect in which the metal-crosslinking thickener "forms a hydrophobic gel by being crosslinked, in an aqueous system, via metal ions derived from an electrode active material" include the following aspects (i) and (ii).

(i) The metal-crosslinking thickening agent comes in contact with the electrode active material. Then, the metal-crosslinking thickening agent is crosslinked with a metal (e.g., transition metal) constituting the electrode active material, at an interface where the metal-crosslinking thickening agent and the electrode active material are in contact with each other. That crosslinking occurs via polyvalent metal ions (e.g., transition metal ions), which are generated from the surface of the electrode active material due to a small amount of water.

(ii) Because of the crosslinking reaction, the hydrophobic gel derived from the metal-crosslinking thickening agent and formed on the surface of the electrode active material coats the electrode active material.

This makes it possible to coat the surface of the electrode active material with the hydrophobic gel. Since coating the surface of the electrode active material makes it possible to prevent a contact between the electrode active material and water which is present in, for example, the slurry for the electrode, it is possible to prevent hydrolysis of the electrode active material. Further, since the electrode active material coated with the hydrophobic gel becomes hydrophobic, the electrode active material never swells with water. Therefore, even in a case where a high-nickel active material and/or the like, which easily undergoes hydrolysis, is used, it is possible to fully utilize the performance of the high-nickel active material and/or the like.

As described earlier, in the aqueous system, the metal ions (alkali metal ions and transition metal ions) derived from the electrode active material may be eluted into the slurry for the electrode, due to hydrolysis of the electrode active material. In a case where the alkali metal ions and the transition metal ions derived from the electrode active material are eluted into an electrolyte while an electrochemical device such as a battery is being constructed, alteration in crystal structure of the electrode active material may occur and result in a decrease in capacity. Further, the transition metal ions which have been eluted into the electrolyte may deposit on the surface of a negative electrode. This may cause an internal short circuit. In particular, although the high-nickel active material advantageously contributes to an increased electrode capacity, the high-nickel active material easily undergoes hydrolysis. Therefore, the above-described issue associated with hydrolysis is a significant issue of the high-nickel active material.

However, in the binder in accordance with an embodiment of the present invention, the metal-crosslinking thickening agent can seal, by crosslinking, the metal ions having been eluted from the electrode active material. This makes it possible to prevent elution of the alkali metal ions and the transition metal ions into the electrolyte and deposition of the transition metal ions on the surface of the negative electrode. Therefore, the electrode active material can be prevented from deteriorating, so that the life duration of the electrochemical device can be extended.

Furthermore, the hydrophobic gel shows high heat resistance. Therefore, the hydrophobic gel functions to protect the electrode active material from heat. This makes it possible to improve performance of an electrochemical device in a high-temperature environment. In other words, since the binder in accordance with an embodiment of the present invention has a high heat resistance, it is possible to construct a long-life electrochemical device excellent in high-temperature endurance.

As such, the metal-crosslinking thickening agent provides the effect of masking the electrode active material against moisture. On the other hand, the effect of the metal-crosslinking thickening agent coating the surface of the electrode active material is exhibited when the pH of the aqueous system in which the binder in accordance with an embodiment of the present invention is present is not alkaline. For example, in a case where the pH of a water-containing slurry for an electrode is alkaline, the crosslinking reaction with the polyvalent metal ions is less likely to occur, and therefore the metal-crosslinking thickening agent is not capable of coating the surface of the electrode active material.

However, the binder in accordance with an embodiment of the present invention contains the pH adjustment functional agent, and therefore makes it possible to adjust the pH of the slurry for the electrode at or near neutral pH. Furthermore, the metal-crosslinking thickening agent, which co-exists with the pH adjustment functional agent in the binder in accordance with an embodiment of the present invention, is thereby capable of providing the effect of buffering pH (described later). This makes it possible to maintain the pH of the slurry for the electrode at or near neutral pH for a long time. This makes it possible to maintain the condition in which the pH of the aqueous system is not alkaline.

(3. pH Buffering effect provided by pH adjustment functional agent and metal-crosslinking thickening agent)

The pH adjustment functional agent, which co-exists with the metal-crosslinking thickening agent in the binder, is thereby capable of providing the effect of buffering the pH of the slurry for the electrode in an aqueous system.

Specifically, molecules of the metal-crosslinking thickening agent are crosslinked with the above-mentioned alkali metal ion and transition metal ion to form a chelate, the pH adjustment functional agent neutralizes a base in the slurry for the electrode, and thereby the state in which the pH is not alkaline is achieved. As a result, changes in pH of the slurry for the electrode are prevented due to acid-base balance. This makes it possible to maintain the pH of the slurry at or near neutral pH.

Furthermore, the metal-crosslinking thickening agent makes it possible to coat the surface of the electrode active material with the hydrophobic gel. Since the surface of the electrode active material is coated, the contact between the electrode active material and water in the slurry for the electrode or the like can be prevented. This makes it possible to prevent further hydrolysis of the electrode active material. Moreover, the electrode active material coated with the hydrophobic gel is hydrophobic, and therefore does not swell with water.

This makes it possible to prevent elution of alkali metal ions and transition metal ions from the electrode active material, and prevent the alkalinization of the pH of the slurry for the electrode. It follows that the slurry for the electrode can be stored for a long time without an increase in pH, and that the corrosion of the current collector can be prevented sufficiently.

In a case where a slurry that contains a high-nickel active material is prepared in an aqueous system, the pH becomes alkaline; therefore, as described earlier, conventional techniques have employed a method by which the pH is neutralized by a weak acid such as oxalic acid and/or acetic acid. However, in this case, the metal-crosslinking thickening agent does not co-exist, and therefore the foregoing buffering effect is not obtained or the surface of the electrode active material cannot be coated with the hydrophobic gel. Thus, it is not possible to prevent the hydrolysis of the electrode active material, and the pH is maintained at or near neutral pH only for a short period of time. Furthermore, the weak acid and the electrode active material react with each other and thereby the electrode active material is decomposed, resulting in a reduction in the life of an electrochemical device such as a battery.

The binder in accordance with an embodiment of the invention is capable of providing the foregoing buffering effect, and therefore is not accompanied by such an issue. This makes it possible to prevent the deterioration of the electrode active material and contribute to increasing the life of the electrochemical device.

Note that, in a case where the metal ion sealing effect of the metal-crosslinking thickening agent is insufficient and/or a case where the neutralization effect of the pH adjustment functional agent is insufficient, the binder in accordance with an embodiment of the present invention can further contain a pH adjuster and/or chelator.

Examples of the pH adjuster and/or chelator include borate buffer, phosphate buffer, acetate buffer, Tris buffer, HEPES buffer, chitosan, chitin, Alg-H, EDTA, and edetates (ethylenediaminetetraacetates) such as EDTA2K, EDTA2Na, EDTA3Na, and EDTA4Na. One of such pH adjusters and/or chelators may be used alone or two or more of them may be used in combination.

As has been described, the binder in accordance with an embodiment of the present invention contains the pH adjustment functional agent, and therefore makes it possible to achieve the condition in which the pH of an aqueous system is not alkaline.

If follows that the metal-crosslinking thickening agent contained in the binder is capable of coating the surface of the electrode active material. In other words, the binder in accordance with an embodiment of the present invention prevents the hydrolysis of the electrode active material in an aqueous system because the pH adjustment functional agent and the metal-crosslinking thickening agent work together.

Note, here, that the binder disclosed in Patent Literature 1 contains Alg-H as a main component. In a case where this binder is used in preparing, for example, a slurry for an electrode that contains a high-nickel active material, the Alg-H neutralizes a base which has been eluted into the slurry for the electrode due to the hydrolysis of a residual raw material (unreacted raw material) and/or the like during the production of the electrode active material, resulting in generation of water. This makes it possible to prevent the alkalinization of the slurry for the electrode.

However, the high-nickel active material is highly reactive with water; therefore, the water molecules formed in the neutralization react with the high-nickel active material, and thereby the hydrolysis does not stop and the elution of metal ions from the high-nickel active material continues.

That is, although the binder disclosed in Patent Literature 1 is usually capable of sufficiently preventing the deterioration of the electrode active material which is highly reactive with water, there may be cases in which the deterioration of the electrode active material cannot be prevented sufficiently if the electrode active material is, like a high-nickel active material, very highly reactive with water.

In contrast, as described earlier, the binder in accordance with an embodiment of the present invention is capable of sufficiently preventing the hydrolysis of the electrode active material even in cases where the electrode active material is one that is very highly reactive with water, because the pH adjustment functional agent and the metal-crosslinking thickening agent work together. This prevents the issue, in which hydrolysis does not stop, from arising.

(4. Production of binder in accordance with an embodiment of the present invention)

The binder in accordance with an embodiment of the present invention can be prepared by uniformly mixing and dispersing, with use of a dispersing device, a pH adjustment functional agent and a metal-crosslinking thickening agent. A thickener such as gelatin, polyvinyl pyrrolidone, and/or carboxymethyl cellulose (CMC) can be added to the binder. In order to obtain a binder having a more uniform particle diameter, it is preferable that the preparation is carried out while pulverizing is carried out with use of grinding balls such as zirconia balls.

It is possible to use, as such a dispersing device, for example, a jet mill, a sand mill, a ball mill, a bead mill, an LMZ mill, a DCP pearl mill, a planetary ball mill, a homogenizer, a twin screw kneading extruder, or a thin-film spin system high-speed mixer.

It is preferable that the binder in accordance with an embodiment of the present invention have an average particle diameter which is equivalent to that of the electrode active material. Accordingly, the binder has a median diameter D50 of preferably not less than 100 nm, and more preferably not less than 200 nm. The median diameter D50 of the binder is preferably not more than 20 $\mu$m, and more preferably not more than 10 $\mu$m. The average particle diameter can be calculated from a particle diameter distribution which is measured by a laser diffraction method with use of a bulk density measuring device MT-3300 (manufactured by Microtrac).

A method of confirming that a resultant product is the binder in accordance with an embodiment of the present invention includes, for example, a component detection method which applies a colorimetric assay method to an aqueous solution containing the binder or a detection method using measurement of powder of the binder by FT-IR.

(5. Kind and amounts of constituents of binder in accordance with an embodiment of the present invention)

It is preferable that the binder in accordance with an embodiment of the present invention contains the pH adjustment functional agent in an amount of not less than 15 mass% and not more than 95 mass% and the metal-crosslinking thickening agent in an amount of not less than 5 mass% and not more than 85 mass%, the total mass of the pH adjustment functional agent and the metal-crosslinking thickening agent being 100 mass%.

With regard to components other than the pH adjustment functional agent and the metal-crosslinking thickening agent, the binder may contain, if needed, one or more of the following components described earlier, for example: a thickener such as gelatin, polyvinyl pyrrolidone, and/or CMC; a pH adjuster and/or chelator; and/or the like.

The amount of the component(s) other than the pH adjustment functional agent and the metal-crosslinking thickening agent is preferably 0 mass% to 15 mass%, more preferably 0 mass% to 12 mass%, even more preferably 0 mass% to 10 mass%, where 100 mass% represents the total mass of the pH adjustment functional agent, the metal-crosslinking thickening agent, and the component(s).

(6. Electrode active material)

As described earlier, the binder in accordance with an embodiment of the present invention is capable of sufficiently preventing hydrolysis even in a case where an electrode active material that is highly prone to hydrolysis such as a high-nickel active material is used. It is therefore preferable that the electrode active material used together with the binder in accordance with an embodiment of the present invention is a positive electrode active material and that the positive electrode active material is an alkali metal complex oxide.

In a case where the alkali metal complex oxide is, for example, a positive electrode active material for a lithium-ion secondary battery, examples of the alkali metal complex oxide include the following lithium complex oxides: lithium nickelate [$LiNiO_2$ (hereinafter, referred to as "LNO")]; a ternary material [$LiNi_{0.33}Co_{0.33}Mn_{0.33}O_2$ (hereinafter, referred to as "NMC111")]; high-nickel ternary materials [$LiNi_{0.5}Co_{0.2}Mn_{0.3}O_2$ (hereinafter, referred to as "NMC532"), $LiNi_{0.6}CO_{0.2}Mn_{0.2}O_2$ (hereinafter, referred to as "NMC622"), and $LiNi_{0.8}Co_{0.1}Mn_{0.1}O_2$ (hereinafter, referred to as "NMC811")]; lithium nickel cobalt aluminum oxide [$LiNi_{0.8}Co_{0.15}Al_{0.05}O_2$ (hereinafter, referred to as "NCA")]; lithium nickel phosphate [$LiNiPO_4$ (hereinafter, referred to as "LNP")]; lithium-rich solid solution system [$Li_2MnO_3$-$LiNi_{0.33}Mn_{0.33}Co_{0.33}O_2$ (hereinafter, referred to as "L2M")]; spinel lithium manganese nickel oxide [$LiNi_{0.5}Mn_{1.5}O_4$ (hereinafter, referred to as "LNM")]; and lithium manganese nickel iron oxide [$LiNi_{0.33}Fe_{0.33}Mn_{0.33}O_2$ (hereinafter, referred to as "NFM")].

There is no problem in using an alkali metal complex oxide containing constituent elements at respective ratios which are somewhat different from those in chemical formulae shown above as examples.

The alkali metal complex oxide can be an alkali metal complex oxide which does not contain nickel. Examples of such an alkali metal complex oxide include lithium cobaltate ($LiCoO_2$), lithium manganate ($LiMn_2O_4$), and lithium iron phosphate ($LiFePO_4$).

The above description has dealt with lithium complex oxides as examples of the alkali metal complex oxide, but the alkali metal complex oxide is not limited to those examples. The alkali metal complex oxide can be changed as appropriate in accordance with a type of the electrochemical device to which the alkali metal complex oxide is applied. For example, in a case where the electrochemical device is a sodium ion secondary battery, it is possible to use a sodium complex oxide which is obtained by replacing lithium in the lithium complex oxide with sodium. On the other hand, for example, in a case where the electrochemical device is a potassium ion secondary battery, it is possible to use a potassium complex oxide.

It is possible to use, as the electrode active material, one of the above electrode active materials alone or two or more of the above electrode active materials in combination. Meanwhile, the electrode active material can also be, for example, an electrode active material doped with a small amount of element such as fluorine, boron, aluminum, chromium, zirconium, molybdenum, or iron, or an electrode active material obtained by surface treatment of the surface of the particles of the alkali metal complex oxide with, for example, at least one selected from the group consisting of carbon, MgO, $Al_2O_3$, and $SiO_2$.

The electrode active material used together with the binder in accordance with an embodiment of the present invention can be a negative electrode active material made of an alkali metal complex oxide. Examples of such a negative electrode active material include lithium titanate (such as $Li_4Ti_5O_{12}$ and $Li_2Ti_3O_7$) and a negative electrode active material obtained by surface treatment of the surface of particles of lithium titanate with, for example, at least one compound selected from the group consisting of carbon, MgO, $Al_2O_3$, and $SiO_2$.

The binder in accordance with an embodiment of the present invention most effectively exhibits its characteristic in a case where the binder is used together with an alkali metal complex oxide containing Ni. However, the electrode active material is not limited to such an alkali metal complex oxide. The binder in accordance with an embodiment of the present invention can alternatively be used together with an electrode active material which is not an alkali metal complex oxide.

The electrode active material can be, for example, at least one selected from the group consisting of: transition metal oxides such as $TiO_2$, $Nb_2O_5$ $TiNb_2O_7$, $CuO$, $Cu_2O$, $MnO_2$, $MoO_3$, $V_2O_5$, $CrO_3$, $MoO_3$, $Fe_2O_3$, $Ni_2O_3$ and $CoO_3$; metal chalcogenides such as $TiS_2$, $MoS_2$, and $NbSe_3$; and conductive polymer compounds such as polyacene, polyparaphenylene, polypyrrole, and polyaniline; and graphite.

The alkali metal complex oxide is preferably a complex oxide whose composition is represented by $Li_{1+u}Ni_{1-x-y-z}Co_xMn_yM_zO_2$, where M is at least one element selected from the group consisting of Fe, V, Mg, Al, Ti, Mo, Nb, Zr, and W, and where

$-0.05 \leq u \leq 0.50$,
$0 \leq x \leq 0.35$,
$0 \leq y \leq 0.35$,
$0 \leq z \leq 0.1$, and
$0 \leq x+y+z \leq 0.7$.

In a case where M is two or more elements selected from the above-stated group, z is the total number of moles of such two or more elements, and this total number may be 0 or more and 0.1 or less. In this case, the two or more elements may have any ratio.

The alkali metal complex oxide having the above-described composition contains a large amount of Ni. Therefore, the binder in accordance with an embodiment of the present invention is capable of effectively preventing hydrolysis of the alkali metal complex oxide, and the alkali metal complex oxide can be used stably even in an aqueous system. It is therefore possible to fully exhibit useful characteristics intrinsic to the alkali metal complex oxide, i.e., the characteristics which make it possible to provide an electrochemical device with high electrode capacity. Note that, in general, an alkali metal complex oxide in which the value of "1-x-y-z" in the foregoing composition is about 0.6 to 1.0 is regarded as a high-nickel active material; however, the electrode active material used together with the binder is not limited to such an active material.

[2. Binder-containing liquid]

(2-1. Binder-containing liquid which contains: binder in accordance with an embodiment of the present invention; and water or water-containing hydrophilic organic solvent)

A binder-containing liquid in accordance with an embodiment of the present invention is a liquid that contains: a binder in accordance with an embodiment of the present invention; and water or a water-containing hydrophilic organic solvent. The binder-containing liquid may be hereinafter referred to as "binder-containing liquid 1". The "water-containing hydrophilic organic solvent" may be hereinafter referred to as "water-containing organic solvent" for short.

The binder-containing liquid 1 may be (i) a liquid in which the binder is dispersed in water or a water-containing organic solvent or (ii) a liquid in which the binder is partially or entirely dissolved in water or a water-containing organic solvent.

As described earlier, the foregoing binder is very suitable for use in an aqueous system. Therefore, by allowing the binder to exist in water or a water-containing organic solvent in advance (like the binder-containing liquid 1), it is possible to stably store the binder in an aqueous system. Furthermore, for example, by adding and mixing an electrode active material into the binder-containing liquid 1, it is possible to easily prepare a slurry for an electrode.

The water is not particularly limited, and generally-used water can be used. Examples of the water include tap water, distilled water, water, and ultrapure water. Distilled water, water, and ultrapure water are preferred among others.

The water-containing organic solvent is a solvent which is a blend of water and a hydrophilic organic solvent. A hydrophilic organic solvent is a water-soluble organic solvent that is uniformly miscible with water. Examples of the hydrophilic organic solvent include: N-methyl-2-pyrrolidone; dimethyl sulfoxide; alcohols such as methanol, ethanol, 2-propanol (IPA), isopropanol, n-butanol, and t-butanol; ketones such as acetone and methyl ethyl ketone (MEK); ethers such as 1,4-dioxane and tetrahydrofuran (THF); N,N-dimethylformamide (DMF); N,N-dimethylacetamide (DMAc); dimethyl sulfoxide (DMSO); acetonitrile; and ethyl acetate. One of such hydrophilic organic solvents may be used or two or more of such hydrophilic organic solvents may be used.

The ratio between water and the hydrophilic organic solvent in the water-containing organic solvent may be selected appropriately in consideration of the type of hydrophilic organic solvent, compatibility between water and the hydrophilic organic solvent, and the like.

The binder-containing liquid 1 can be prepared by, for example, mixing a binder in accordance with an embodiment of the present invention with water or the water-containing organic solvent. A method of mixing is not particularly limited, and can be a method of mixing using any of various grinders, mixers, stirrers, and the like, a method involving ultrasonic dispersion, or the like.

Examples of the method of mixing include: processing which utilizes shearing force or collision, such as those using a mixer, a high-speed rotating mixer, a shear mixer, a blender, a ultrasonic homogenizer, a high-pressure homogenizer, or a ball mill; and methods using a Waring blender, a flash mixer, a turbulizer, or the like. Two or more of such methods may be used in combination as appropriate.

The concentration of the binder in accordance with an embodiment of the present invention in the binder-containing liquid 1 is preferably 0.5 mass% to 90 mass%, where 100 mass% represents the sum of the mass of the water or the water-containing organic solvent and the mass of the binder, in terms of long-term preservability.

(2-2. Binder-containing liquid which contains: binder in accordance with an embodiment of the present invention; and specific emulsion)

A binder-containing liquid in accordance with an embodiment of the present invention is a liquid that contains: a binder in accordance with an embodiment of the present invention; and an emulsion of a polyacrylic acid copolymer resin, an emulsion of a styrene-butadiene copolymer rubber, an emulsion of a fluorine-containing copolymer, or an aqueous dispersion of a fluorine-containing copolymer. The binder-containing liquid may be hereinafter referred to as "binder-containing liquid 2".

The polyacrylic acid copolymer resin, styrene-butadiene copolymer rubber, or fluorine-containing copolymer makes it possible to increase the binding ability of the binder. Therefore, according to the above arrangement, it is possible to enhance the function of connecting electrode materials of an electrochemical device, i.e., a basic function of the binder.

The binder in accordance with an embodiment of the present invention has already been described. The emulsion is a liquid that contains (i) a dispersion medium (liquid) and (ii) an organic polymer as a dispersoid which is dispersed in the dispersion medium.

The "emulsion of a polyacrylic acid copolymer resin" is an emulsion of a copolymer resin, which emulsion is obtained by emulsion polymerization of an acrylic acid monomer with, for example, some other reactive monomer(s) in water. Examples of the "other reactive monomer" include: vinylidene fluoride monomers; styrene monomers; ethylenically unsaturated monomers containing a nitrile group, such as $\alpha,\beta$-unsaturated nitrile monomers such as acrylonitrile, methacrylonitrile, $\alpha$-chloroacrylonitrile, crotonnitril, $\alpha$-ethyl acrylonitrile, $\alpha$-cyanoacrylate, vinylidene cyanide, and fumaronitrile; ethylenically unsaturated monomers containing a carboxylic acid, such as monofunctional monomers such as methacrylic acid and acrylic acid, fumaric acid, maleic acid, itaconic acid, citraconic acid, mesaconic acid, glutaconic acid, 1,2,3,6-tetrahydrophthalic acid, 3-methyl-1,2,3,6-tetrahydrophthalic acid, 4-methyl-1,2,3,6-tetrahydrophthalic acid, methyl-3,6-endo-methylene-1,2,3,6-tetrahydrophthalic acid, exo-3,6-epoxy-1,2,3,6-tetrahydrophthalic acid, and nadic acid; anhydrides of the ethylenically unsaturated monomers containing a carboxylic acid; saponified products of the anhydrides; ethylenically unsaturated monomers containing a ketone group, such as methyl vinyl ketone, ethyl vinyl ketone, isopropyl vinyl ketone, isobutyl vinyl ketone, t-butyl vinyl ketone, and hexyl vinyl ketone; and ethylenically unsaturated monomers containing an organic acid vinyl ester group, such as vinyl acetate, vinyl propionate, vinyl butyrate, vinyl trimethylacetate, vinyl caproate, vinyl caprylate, vinyl laurate, vinyl palmitate, and vinyl stearate. One of such reactive monomers may be used or two or more of such reactive monomers may be used in combination.

The polyacrylic acid copolymer resin may have its terminal(s) substituted with a specific functional group(s) to obtain a modified version of the polyacrylic acid copolymer resin that is reactive with specific monomer or the like. Examples of the modified version of the polyacrylic acid copolymer resin include epoxy-modified polyacrylic acid copolymer resins, carboxy-modified polyacrylic acid copolymer resins, isocyanate-modified polyacrylic acid copolymer resins, and hydrogen-modified polyacrylic acid copolymer resins.

The "styrene-butadiene copolymer rubber" is particles made of a copolymer of styrene and butadiene, and has a copolymer component derived from styrene and a copolymer component derived from butadiene. The copolymer component derived from styrene is contained in an amount of preferably 50 mol% to 80 mol%, relative to all copolymer components constituting the styrene-butadiene copolymer. The copolymer component derived from butadiene is contained in an amount of preferably 20 mol% to 50 mol%, relative to the all copolymer components.

The styrene-butadiene copolymer can contain some other reactive monomer(s) in addition to the copolymer component derived from styrene and the copolymer component derived from butadiene. It is possible to use, as the "other reactive monomer", for example, substances described earlier as components of the "emulsion of a polyacrylic acid copolymer resin".

In a case where the styrene-butadiene copolymer has such other reactive monomer(s), the other reactive monomer(s) is preferably contained in an amount of 1 mol% to 30 mol%, relative to the all copolymer components constituting the styrene-butadiene copolymer. The styrene-butadiene copolymer can be any of a random copolymer, a block copolymer, and a graft copolymer. Further, the styrene-butadiene copolymer can be a carboxy-modified polymer.

The "emulsion of a styrene-butadiene copolymer rubber" is an emulsion of rubber particles, which emulsion is obtained by emulsion polymerization of a styrene monomer and a butadiene monomer, and if needed, the other reactive monomer(s), in water. The "emulsion of a styrene-butadiene copolymer rubber" may be called latex or synthetic rubber latex.

Note that any of the following can be used instead of the styrene-butadiene copolymer rubber: butadiene rubber (BR), isoprene rubber (IR), chloroprene rubber (CR), nitrile rubber (NBR), butyl rubber (IIR), ethylene-propylene rubber (EPDM), natural rubber (NR), and the like.

The "fluorine-containing copolymer" is a copolymer containing, in its molecule, a polymer of at least one type of fluorine-containing monomer. Examples of the fluorine-containing copolymer include copolymer of polyvinylidene fluoride (PVDF) and polyvinyl alcohol (PVA), tetrafluoroethylene-hexafluoropropylene copolymer (FEP), tetrafluoroethylene-perfluoroalkyl vinyl ether copolymer (PFA), polyvinylidene fluoride-hexafluoropropylene (PVdF-co-HFP), ethylene-tetrafluoroethylene copolymer (ETFE), polychlorotrifluoroethylene (PCTFE), propylene-tetrafluoroethylene copolymer, and ethylene-chlorotrifluoroethylene copolymer (ECTFE).

The "emulsion of a fluorine-containing copolymer" is an emulsion of a copolymer resin, which emulsion is obtained by emulsion polymerization of one type of fluorine-containing monomer and some other reactive monomer(s) or by emulsion polymerization of two or more types of fluorine-containing monomers and/or the like, in water. The "aqueous dispersion of a fluorine-containing copolymer" is (i) an aqueous solution of a copolymer resin obtained by copolymerization of one type of fluorine-containing monomer and some other reactive monomer(s) or by copolymerization of two or more types of fluorine-containing monomers and/or the like or (ii) a dispersion composed of water and the copolymer resin dispersed in the water.

Examples of the "other reactive monomer" include PVA, hexafluoropropylene, ethylene, and propylene.

The amount (solid content concentration) of the polyacrylic acid copolymer resin, styrene-butadiene copolymer rubber, or fluorine-containing copolymer contained in the emulsion of the polyacrylic acid copolymer resin, emulsion of the styrene-butadiene copolymer rubber, emulsion of the fluorine-containing copolymer, or aqueous dispersion of the fluorine-containing copolymer is preferably 0.1 mass% to 80 mass%, more preferably 0.5 mass% to 65 mass%.

The solid content concentration of the binder-containing liquid 2 is preferably 0.5 mass% to 95 mass%, more preferably 1.0 mass% to 85 mass%. The solid content concentration refers to the proportion of the sum of the mass of the binder in accordance with an embodiment of the present invention and the mass of the polyacrylic acid copolymer resin, styrene-butadiene copolymer rubber, or fluorine-containing copolymer to the mass of the binder-containing liquid 2.

In the binder-containing liquid 2, the mass ratio between the binder in accordance with an embodiment of the present invention and the polyacrylic acid copolymer resin, styrene-butadiene copolymer rubber, or fluorine-containing copolymer is preferably as follows: the amount of the binder is 25 mass% to 96.6 mass%, where 100 mass% represents the sum of the mass of the binder and the mass of the polyacrylic acid copolymer resin, styrene-butadiene copolymer rubber, or fluorine-containing copolymer.

The emulsion polymerization in preparing the emulsion of the polyacrylic acid copolymer resin, the emulsion of the styrene-butadiene copolymer rubber, or the emulsion of the fluorine-containing copolymer can be carried out by, for example, a general emulsion polymerization method such as a soap-free emulsion polymerization method or a seed polymerization method. For example, the emulsion can be prepared by: (i) setting, in a stirrer with a heater, a hermetically-closed container which is filled with inert gas; (ii) introducing, into the hermetically-closed container, monomers for reaction, an emulsifier, a polymerization initiator, and water, and if needed, a dispersing agent, a chain transfer agent, a pH adjuster, and/or the like, and mixing these together; (iii) emulsifying, in water, the monomers etc. which are being heated and stirred; and (iv) copolymerizing the monomers with each other by further heating and stirring.

The emulsion polymerization can be carried out by shearing or using ultrasound instead of stirring. It is possible to use, as emulsifying equipment, a homodisper, a homogenizer, an ultrasonic homogenizer, a centrifugal mixer, a high-speed rotating mixer, a shear mixer, a blender, or the like.

Examples of the emulsifier include anionic surfactants such as a dodecyl benzene sulfonate and an aliphatic sulfonate; cationic surfactants such as a polyethylene glycol alkyl ether and a polyethylene glycol alkyl ester; and amphoteric surfactants.

Examples of the polymerization initiator include: inorganic peroxides such as ammonium persulfate and potassium perphosphate; organic peroxides such as t-butyl peroxide, cumen hydroperoxide, p-mentane hydroperoxide, di-t-butyl peroxide, t-butylcumyl peroxide, dibenzoyl peroxide, 3,5,5-trimethylhexanoyl peroxide, and t-butyl peroxyisobutyrate; and azo compounds such as azobisisobutyronitrile, azobis-2,4-dimethyl valeronitrile, azobiscyclohexane carbonitrile, and methyl azobisisobutyrate.

The aqueous dispersion of the fluorine-containing copolymer can be prepared by, for example, mixing fluororesin particles having a primary particle size of about 100 nm to 500 nm and a fluororesin dispersing agent into water and dispersing them with use of a stirrer. The fluororesin dispersing agent that can be used is not particularly limited, provided that the fluororesin dispersing agent is a surfactant having a fluorocarbon chain(s).

The emulsion or the aqueous dispersion is not particularly limited in structure of a copolymer therein. The copolymer in the emulsion or the aqueous dispersion can have, for example, an intra-particle crosslinked structure, an inter-particle crosslinked structure, or a composite structure such as a core-shell structure. The copolymer in the emulsion is not particularly limited in shape of particles. The particles of the copolymer can have a spherical shape, a plate-like shape, a hollow structure, a composite structure, or the like. The particles of the copolymer can have two or more kinds of structures in combination. Meanwhile, the polyacrylic acid copolymer resin, the styrene-butadiene copolymer rubber, or fluorine-containing copolymer can each have two or more composition types. Examples of water for use in preparing the emulsion or the aqueous dispersion are the same as those discussed with regard to the binder-containing liquid 1.

The binder-containing liquid 2 can be prepared by mixing (i) the binder in accordance with an embodiment of the present invention and (ii) the emulsion or the aqueous dispersion. A method of mixing is not particularly limited.

(2-3. Binder-containing liquid that contains conductive auxiliary agent)

Each of the binder-containing liquids 1 and 2 may further contain a conductive auxiliary agent. The conductive auxiliary agent is not particularly limited, and can be a metal, a carbon material, a conductive polymer, or conductive glass. Among others, the carbon material is preferable. Examples of the carbon material include nanocarbons such as carbon nanotube, carbon nanofiber, carbon nanohorn, and fullerene, acetylene black, furnace black, thermal black, channel black, Ketjen black Registered Trademark), Vulcan, graphene, vapor grown carbon fiber (VGCF), and graphite. The carbon material is more preferably acetylene black. The carbon nanotube can be a single-layer carbon nanotube, a double-layer carbon nanotube, or a multilayer carbon nanotube. It is possible to use one of the above conductive auxiliary agents alone or two or more of the above conductive auxiliary agents in combination. For example, a mixture of two or more of the conductive auxiliary agents can be used.

Further, it is possible to pretreat the carbon material by a surface treatment. Examples of the surface treatment include an oxidation treatment, a graft polymerization reaction, a coupling treatment, a mechanical treatment, a plasma treatment, graphitization, and an activation treatment. Such a pretreatment changes the state of the surface of the carbon material and inhibits agglomeration of the carbon material itself. This makes it possible to improve dispersibility of the carbon material.

Each of the binder-containing liquids 1 and 2, containing a conductive auxiliary agent, is a solution made up of: a binder-containing liquid; and the conductive auxiliary agent uniformly dispersed in the binder-containing liquid. The phrase "uniformly dispersed" means a state in which (i) there are no agglomerates when filtration is carried out using a 50 mesh filter and (ii) no precipitates appear when centrifugation is carried out. In order to determine whether a solution is one in which the conductive auxiliary agent is uniformly dispersed in a solvent, the centrifugation is carried out preferably under the conditions in which centrifugal acceleration is 7000 ($\times$g) and the time during which the centrifugation is carried out is about 10 minutes.

Each of the binder-containing liquids 1 and 2 is a dispersion in which the binder in accordance with an embodiment of the present invention is dispersed, a solution in which the binder in accordance with an embodiment of the present invention is dissolved, or an emulsion of the binder in accordance with an embodiment of the present invention. Therefore, when preparing a slurry for an electrode (described later), it is possible to easily disperse an electrode active material and a conductive auxiliary agent uniformly in the slurry. In particular, when the conductive auxiliary agent is uniformly dispersed in the slurry for the electrode, conductivity is maximized; therefore, it is possible to reduce electric resistance of an electrode. This, in turn, makes it possible to improve output characteristics of a battery.

Main components of the binder-containing liquids 1 and 2 each of which contains a conductive auxiliary agent are the binder in accordance with an embodiment of the present invention and the conductive auxiliary agent; however, each of the binder-containing liquids 1 and 2 may contain some other additive(s). Examples of other additives include dispersion stabilizers, leveling agents, and viscosity modifiers.

A binder-containing liquid that contains a conductive auxiliary agent can be prepared by, for example, mixing the binder-containing liquid 1 or 2 with a conductive auxiliary agent. Alternatively, a binder-containing liquid that contains a conductive auxiliary agent can be prepared by, for example, (i) a method involving: mixing powder of the binder in accordance with an embodiment of the present invention with powder of the conductive auxiliary agent; and adding and dispersing the obtained mixture in water or the water-containing organic solvent, (ii) a method involving adding and dispersing the above-obtained mixture in the emulsion of a polyacrylic acid copolymer resin, emulsion of a styrene-butadiene copolymer rubber, emulsion of a fluorine-containing copolymer, or aqueous dispersion of a fluorine-containing copolymer, or the like method. Note that, for convenience of description, a liquid which is mixed with a conductive auxiliary agent may be hereinafter referred to as "solvent".

In order to uniformly disperse a conductive auxiliary agent in a solvent, it is preferable that the conductive auxiliary agent or the foregoing mixture is added to the solvent in small batches under the condition in which the solvent is irradiated with ultrasonic waves. It is also preferable that the conductive auxiliary agent or the mixture is added to the solvent in small batches under the condition in which the solvent is stirred with use of a ball mill, a bead mill, or the like instead of irradiation with ultrasonic waves.

The binder-containing liquids 1 and 2, each of which contains a conductive auxiliary agent, has a viscosity of preferably 10 mPa·s to 10000 mPa·s. The viscosity is a value measured at 25°C, and can be measured with use of a viscometer (e.g., type B viscometer manufactured by Brookfield).

The median diameter (also called "D50" or "50% particle diameter") of the conductive auxiliary agent is preferably in the range of 10 $\mu$m to 1 $\mu$m. When the particle size distribution of the conductive auxiliary agent is such that the median diameter falls within the range of 10 $\mu$m to 1 $\mu$m, the conductive auxiliary agent can be stably and uniformly dispersed, at higher concentration, in a solvent. The median diameter can be calculated from a particle diameter distribution measured by a laser diffraction method with use of a bulk density measuring device MT-3300 (manufactured by Microtrac).

The concentration of the conductive auxiliary agent in each of the binder-containing liquids 1 and 2 is preferably 0.1 mass% to 15 mass%. When the concentration is more than 15 mass%, the conductive auxiliary agent may be difficult to stably and uniformly disperse in a solvent.

When the conductive auxiliary agent and the solvent are mixed together, some metal ions may enter the mixture. The entry of metal ions can negatively affect electrical characteristics of an electrochemical device; therefore, usually, the entry of metal ions is undesirable. In contrast, according to the binder-containing liquids 1 and 2, the metal-crosslinking thickening agent contained in the binder in accordance with an embodiment of the present invention provides the effect of sealing metal ions; therefore, even if metal ions enter, such entry has no or little effect on the electrical characteristics.

[3. Composition]

A composition in accordance with an embodiment of the present invention contains: a binder in accordance with an embodiment of the present invention; and a polyacrylic acid copolymer resin, a styrene-butadiene copolymer rubber, or a fluorine-containing copolymer. The composition contains no or little water or organic solvent. The composition can be prepared by, for example, subjecting the binder-containing liquid 2 to spray drying and thereby evaporating water contained in the binder-containing liquid 2.

Spray drying is a method that involves quickly drying a solution or the like with use of hot gas and thereby generating particles or dry powder containing no or little residual liquid or residual solvent. Spray drying makes it possible to obtain particles having a relatively narrow particle size distribution.

Thus, the composition is advantageous in that the composition is easy to handle and is easy to disperse into water or into a water-containing hydrophilic organic solvent.

The manner in which spray drying is carried out and an apparatus with which spray drying is carried out are not particularly limited. The manner in which spraying is carried out can be, for example, nozzle spraying, centrifugal spraying, or the like. The manner in which the particles or dry powder is/are collected can be, for example, taking-up manner, blowdown manner, collective trapping using a bag filter, or the like. Examples of a heat-drying medium include gasses such as heated air, nitrogen, oxygen, carbon dioxide, and argon.

The particle size of the composition is not particularly limited, provided that the electric resistance of an electrode in which the composition is employed does not increase. The composition preferably has an average particle diameter (median diameter) of 10 $\mu$m to 100 $\mu$m. An average particle diameter greater than 100 $\mu$m is not preferred, because the electric resistance of the electrode increases. Note that the average particle diameter can be calculated from a particle diameter distribution which is measured by a laser diffraction method with use of a bulk density measuring device MT-3300 (manufactured by Microtrac).

[4. Slurry for electrode]

A slurry for an electrode in accordance with an embodiment of the present invention contains: a binder in accordance with an embodiment of the present invention; an electrode active material; a conductive auxiliary agent; and water. These components have already been described earlier.

The slurry for the electrode in accordance with an embodiment of the present invention contains the binder, and therefore, despite its containing water, makes it possible to prevent hydrolysis of the electrode active material and has a pH maintained at or near neutral pH. This is demonstrated in Example 1 (described later).

Therefore, even in a case where a high-nickel active material which is highly prone to hydrolysis is used, it is possible to maximize the characteristics of the active material without causing a deterioration of the active material. Furthermore, in a case where the slurry is coated on a current collector, an electrode for an electrochemical device can be produced without causing corrosion of the current collector. This eliminates the need for subjecting the current collector to a treatment to impart corrosion resistance.

The slurry for the electrode can be obtained by, for example, mixing a binder in accordance with an embodiment of the present invention in powder form, an electrode active material in powder form, and a conductive auxiliary agent in powder form and then mixing water as a solvent into the mixture and kneading the mixture.

As described earlier, a slurry containing, for example, a high-nickel active material is prepared with use of an organic solvent and a fluorine resin-based binder under present circumstances, because the active material is prone to hydrolysis. In contrast, a slurry for an electrode in accordance with an embodiment of the present invention, which contains a binder in accordance with an embodiment of the present invention, can therefore be prepared with use of water without using an organic solvent, even in a case where a high-nickel active material is used.

Thus, a slurry for an electrode in accordance with an embodiment of the present invention is advantageous in terms of production cost, and is preferred in terms of safety, effects on environment, handleability, and the like. The slurry for the electrode is advantageous also in that the slurry can be stored for a long time without an increase in pH because of the effect of buffering pH provided by the binder.

The slurry for the electrode has a solid content concentration of preferably not less than 30 mass% and less than 100 mass%, more preferably not less than 70 mass% and less than 100 mass%, even more preferably not less than 80 mass% and less than 100 mass%, because solid content concentrations falling within such ranges are preferred in terms of the capacity, resistance, and the like of an electrochemical device.

The proportions of components in the solid content of the slurry for the electrode, in a case where the total amount of the electrode active material, the binder, and the conductive auxiliary agent is 100 mass%, is preferably as follows, for example: the amount of the electrode active material is 60 mass% to 99 mass%, the amount of the binder is 0.1 mass% to 25 mass%, and the amount of the conductive auxiliary agent is 0.1 mass% to 10 mass%. The proportions are more preferably as follows: the amount of the electrode active material is 80 mass% to 95 mass%, the amount of the binder is 0.5 mass% to 15 mass%, and the amount of the conductive auxiliary agent is 0.5 mass% to 5 mass%.

The conductive auxiliary agent can be any of the conductive auxiliary agents described in the "Binder-containing liquid that contains conductive auxiliary agent" section.

A slurry for an electrode in accordance with an embodiment of the present invention can be used to produce an electrode for an electrochemical device in accordance with an embodiment of the present invention in which an electrode mix layer is present on the surface of an electrode substrate by, for example, applying the slurry for the electrode in accordance with an embodiment of the present invention to the surface of the electrode substrate (current collector) and drying the slurry (described later). In a case where the adhesion between the electrode mix layer and the electrode substrate is not strong enough, the slurry for the electrode may further contain, for example, some other binder(s) (hereinafter referred to as "other binder") which is other than the binder in accordance with an embodiment of the present invention. The other binder is not limited to a particular kind, provided that the binder is a substance which achieves firm physical or chemical bonding between particles of the electrode mix layer and which achieves firm interface bonding between the electrode mix layer and the electrode substrate. One of such other binders may be used alone or two or more of such other binders may be used in combination.

The amount of such other binder(s), in terms of the mass of solid content, is preferably 0.01 mass% to 75 mass%, more preferably 0.01 mass% to 50 mass%, even more preferably 0.01 mass% to 25 mass%, where 100 mass% represents the sum of the mass of the binder in accordance with an embodiment of the present invention and the mass of the other binder(s), from the viewpoint that the other binder(s) in such an amount does not impair the effects of the binder in accordance with an embodiment of the present invention.

Examples of the other binder that can be used include the foregoing emulsion of a polyacrylic acid copolymer resin, the foregoing emulsion of a styrene-butadiene copolymer rubber, the foregoing emulsion of a fluorine-containing copolymer, and the foregoing aqueous dispersion of a fluorine-containing copolymer.

[5. Electrode for electrochemical device]

An electrode for an electrochemical device in accordance with an embodiment of the present invention contains a binder in accordance with an embodiment of the present invention. For example, it is possible to produce the electrode for the electrochemical device in accordance with an embodiment of the present invention by applying the slurry for the electrode in accordance with an embodiment of the present invention to the surface of the electrode substrate (current collector) and drying the slurry. The electrode thus produced includes an electrode mix layer on the surface of the electrode substrate.

The slurry for the electrode can be applied by, for example, a method using a knife coater, a comma coater, or a die coater. The electrode substrate can be a substrate made of aluminum foil, copper foil, or the like.

The slurry for the electrode can be applied, in an amount which is not particularly limited, to the electrode substrate. For example, the amount of the slurry to be applied to the electrode substrate can be set so that the electrode mix layer after drying will have a thickness of 0.02 mm to 0.40 mm and preferably 0.05 mm to 0.25 mm.

The step of drying is carried out at a temperature which is not particularly limited. For example, the temperature can be set as appropriate in a range of 50°C to 180°C, and preferably in a range of 80°C to 150°C. The step of drying is carried out for a period of time which can be set as appropriate in a range of, for example, 10 seconds to 120 seconds, and preferably 10 seconds to 80 seconds. Meanwhile, it is possible to carry out the step of drying at 120°C for several hours under reduced pressure. In this case, it is preferable to have a reduced pressure condition where the pressure is not more than 10 Pa.

The electrode for the electrochemical device, which contains the binder, thereby prevents hydrolysis of the electrode active material. Therefore, even in a case where a high-nickel active material or the like which is prone to hydrolysis is used as the electrode active material, it is possible to provide an electrode in which the characteristics of the electrode active material can be sufficiently exhibited.

Furthermore, the electrode for the electrochemical device, which contains the binder, thereby prevents an increase in pH of the electrode mix layer. This eliminates the need for subjecting the current collector to impart corrosion resistance, and therefore the electrode can be produced easily at low cost.

The electrode for the electrochemical device can be used as a positive electrode or a negative electrode of the electrochemical device.

[6. Electrochemical device]

The electrochemical device in accordance with an embodiment of the present invention includes: a positive electrode; a negative electrode; and an electrolyte between the positive electrode and the negative electrode, the positive electrode and/or the negative electrode being an electrode for an electrochemical device in accordance with an embodiment of the present invention.

Further, the electrochemical device is provided with a separator between the positive electrode and the negative electrode so that a short circuit between the positive electrode and the negative electrode will be prevented. The positive electrode and the negative electrode include respective current collectors which are both connected to a power source. Charge and discharge are switched to each other by operating the power source.

Examples of the electrochemical device encompass lithium-ion secondary batteries and electrochemical capacitors, and further encompass non-lithium-ion batteries, lithium ion capacitors, dye-sensitized solar cells, and the like.

The electrochemical device can be used as a highly-safe high-performance electricity storage device. Therefore, the electrochemical device can be mounted on: a compact electronic device such as a mobile phone, a laptop personal computer, a portable digital assistant (PDA), a video camera, or a digital camera; equipment for movement (vehicle), such as an electric bicycle, an electric car, or a train; equipment for power generation such as thermal power generation, wind power generation, hydraulic power generation, nuclear power generation, or geothermal power generation; a natural energy storage system; or the like.

In particular, it is more preferable that the electrochemical device in accordance with an embodiment of the present invention is a lithium-ion secondary battery. The high-nickel active material is promising as an electrode material for a lithium-ion secondary battery because the high-nickel active material is capable of increasing electrode capacity; however, as described earlier, the high-nickel active material is highly prone to hydrolysis.

The electrochemical device in accordance with an embodiment of the present invention includes an electrode for an electrochemical device that contains a binder in accordance with an embodiment of the present invention, and therefore shows charge/discharge characteristics that are equivalent to those of an electrochemical device including an electrode(s) prepared from a slurry prepared using an organic solvent. This is demonstrated in Example 2.

Furthermore, the electrochemical device in accordance with an embodiment of the present invention has characteristics such that the electrochemical device is more stable at high temperature and more voltage resistant than an electrochemical device including an electrode(s) prepared from a slurry prepared using an organic solvent. This is demonstrated in Examples 3 and 4.

It can be said from above that the electrochemical device in accordance with an embodiment of the present invention can contribute to increasing the capacity of a lithium-ion secondary battery or the like and makes it possible to provide an electrochemical device which is highly stable at high temperature and highly voltage resistant.

The present invention is not limited to the embodiments, but can be altered by a skilled person in the art within the scope of the claims. The present invention also encompasses, in its technical scope, any embodiment derived by combining technical means disclosed in differing embodiments.

Examples

The following description will specifically discuss embodiments of the present invention with reference to Examples and Comparative Examples. Note, however, that the present invention is not limited to the following Examples and Comparative Examples.

[Production Example 1]

[1. Preparation of binder]

A binder was prepared with use of the following materials by the following method.

(Materials)

pH Adjustment functional agent: malonic acid
Metal-crosslinking thickening agent: sodium alginate

(Production method)

50 g of malonic acid and 50 g of sodium alginate were placed in a ball mill container. Furthermore, 7 g of heptane as a dispersion medium and 500 g of zirconia balls having a diameter of 2 mm as grinding balls were added. The resulting mixture was subjected to pulverizing at room temperature for 60 hours. The zirconia balls were removed, and then the pulverized product was washed with methanol. Then, the obtained product was dried at 100°C at $10^{-2}$ Pa for 30 hours, and thereby a binder was obtained.

[2. Preparation of slurry for formation of positive-electrode mix layer]

2 parts by mass of the binder obtained in the [1. Preparation of binder] section, 95 parts by mass of NCA, NMC532, NMC622, or NMC811 as a positive electrode active material, and 3 parts by mass of acetylene black as a conductive auxiliary agent were mixed together.
25 parts by mass of water was added to the obtained mixture, the mixture was kneaded with use of a planetary mixer (T.K. HIVIS MIX, manufactured by PRIMIX Corporation), and thereby a slurry for formation of positive-electrode mix layer was prepared. The slurry for formation of positive-electrode mix layer corresponds to a slurry for an electrode in accordance with an embodiment of the present invention.

[3. Preparation of positive electrode for electrochemical device]

The slurry for formation of positive-electrode mix layer obtained in the [2. Preparation of slurry for formation of positive-electrode mix layer] section was applied in a band form, by a roller coating method, to both sides of long aluminum foil (positive electrode current collector) having a thickness of 15 $\mu$m so that the weight per unit area per surface would be 12 mg/cm$^2$. The weight per unit area is a positive electrode active material-weight basis value. Specifically, the above weight per unit area means that the slurry is applied so that the amount of the positive electrode active material per surface is 12 mg/cm$^2$.
Then, the aluminum foil having the slurry for formation of positive-electrode mix layer applied thereon was dried at 100°C for 80 seconds, and thereby a positive-electrode mix layer was formed. The positive-electrode mix layer was subjected to rolling with use of a roll press machine, so that the filling density of the positive electrode was adjusted to 3.0 g/cc. In this way, a positive electrode for an electrochemical device was obtained.

[4. Preparation of negative electrode for electrochemical device]

Natural graphite powder (NC, average particle diameter: 10 $\mu$m, specific surface area: 3 m$^2$/g) as a negative electrode active material, styrene butadiene rubber (SBR) as a binder, and carboxymethyl cellulose (CMC) as a thickener were mixed with ultrapure water so that the mass ratio would be NC:SBR:CMC = 96:2:2 and the solid content concentration would be 55 mass%. In this way, a slurry for formation of negative-electrode mix layer was obtained.
The slurry for formation of negative-electrode mix layer was applied in a band form, by a roller coating method, to both sides of long copper foil (negative electrode current collector) having a thickness of 10 $\mu$m so that the weight per unit area per surface would be 5.9 mg/cm$^2$, and dried (at a drying temperature of 80°C for 60 minutes). In this way, a negative-electrode mix layer was formed. The weight per unit area is a negative electrode active material-weight basis value. Specifically, the above weight per unit area means that the slurry is applied so that the amount of the negative electrode active material per surface is 5.9 mg/cm$^2$.

The negative-electrode mix layer was subjected to rolling with use of a roll press machine, so that the filling density of the negative electrode was adjusted to 1.5 g/cc. In this way, a negative electrode for an electrochemical device was obtained.

[Production Example 2] to [Production Example 6]

The same methods as described in Production Example 1 were carried out using materials in the same amounts as described in Production Example 1, except that the materials for the binder of Production Example 1 were changed as shown in Table 1. In this way, a binder, a slurry for formation of positive-electrode mix layer, a positive electrode for an electrochemical device, and a negative electrode for an electrochemical device were prepared.

[Production Example 7]

[1. Preparation of binder]

A binder was prepared with use of the following materials by the following method.

(Materials)

    pH Adjustment functional agent: potassium gluconate, malonic acid
    Metal-crosslinking thickening agent: potassium alginate

(Production method)

30 g of potassium gluconate, 20g of malonic acid, and 50 g of potassium alginate were placed in a ball mill container. Furthermore, 7 g of heptane as a dispersion medium and 500 g of zirconia balls having a diameter of 2 mm as grinding balls were added. The resulting mixture was subjected to pulverizing at room temperature for 60 hours. The zirconia balls were removed, and then the pulverized product was washed with methanol. Then, the obtained product was dried at 100°C at $10^{-2}$ Pa for 30 hours, and thereby a binder was obtained.
The same methods as described in Production Example 1 were carried out, and thereby a slurry for formation of positive-electrode mix layer, a positive electrode for an electrochemical device, and a negative electrode for an electrochemical device were prepared.

[Production Example 8] to [Production Example 55]

The same methods as described in Production Example 7 were carried out using materials in the same amounts as described in Production Example 7, except that the materials for the binder of Production Example 7 were changed as shown in Tables 1 to 6. In this way, a binder, a slurry for formation of positive-electrode mix layer, a positive electrode for an electrochemical device, and a negative electrode for an electrochemical device were prepared.

[Table 1]

| Production Example | | | 1 | 2 | 3 | 4 | 5 | 6 | 7 | 8 | 9 | 10 |
|---|---|---|---|---|---|---|---|---|---|---|---|---|---|
| pH adjustment functional agent | Gluconate | Potassium gluconate | | √ | | | | | √ | √ | √ | √ |
| | | Sodium gluconate | | | | | | | | | | |
| | Alkali metal phosphate | Disodium phosphate | | | | √ | | | | | | |
| | | Sodium polyphosphate | | | | | | | | | | |
| | | Sodium metaphosphate | | | | | | | | | | |
| | Alkali metal citrate | Monosodium citrate | | | | | | | | | | |
| | | Disodium citrate | | | | | | √ | | | | |
| | Dicarboxylic acid | Malonic acid | √ | | | | | | √ | | | |
| | | Succinic acid | | | | | | | | √ | | |
| | | Glutaric acid | | | | | | | | | √ | |
| | Inorganic acid (oxoacid) | Sodium orthosilicate | | | √ | | | | | | | |
| | | Monosodium phosphate | | | | | | | | | | √ |
| | Hydroxy acid | Sodium glycolate | | | | | | | | | | |
| | | Sodium lactate | | | | | √ | | | | | |
| | | Sodium DL-malate | | | | | | | | | | |
| Metal-crosslinking thickening agent | Sodium alginate | | √ | | | √ | | | | | √ | |
| | Magnesium alginate | | | √ | | | √ | | | √ | | |
| | Potassium alginate | | | | √ | | | √ | √ | | | √ |
| Positive electrode active material | NCA | pH (Example 1) | 8.8 | 8.6 | 8 | 8.5 | 8.1 | 8.2 | 8 | 7.7 | 7.9 | 7.9 |
| | | Battery performance (Example 2) | B | B | A | B | B | B | A | S | S | A |
| | NMC622 | pH (Example 1) | 7.6 | 7.9 | 7.9 | 7.7 | 8.1 | 7.7 | 7.3 | 7 | 7.4 | 6.9 |
| | | Battery performance (Example 2) | A | A | A | A | A | A | S | S | A | S |
| | NMC811 | pH (Example 1) | 8.5 | 8.4 | 8.8 | 8.6 | 8.2 | 8.4 | 8 | 7.8 | 7.5 | 7.7 |
| | | Battery performance (Example 2) | B | B | B | B | A | B | A | S | S | s |

[Table 2]

| pH adjustment functional agent | | Production Example | 11 | 12 | 13 | 14 | 15 | 16 | 17 | 18 | 19 | 20 |
|---|---|---|---|---|---|---|---|---|---|---|---|---|---|
| pH adjustment functional agent | Gluconate | Potassium gluconate | √ | √ | √ | | | | | | | |
| pH adjustment functional agent | Gluconate | Sodium gluconate | | | | √ | √ | √ | √ | √ | √ | √ |
| pH adjustment functional agent | Alkali metal phosphate | Disodium phosphate | | | | | | | | | | |
| pH adjustment functional agent | Alkali metal phosphate | Sodium polyphosphate | | | | | | | | | | |
| pH adjustment functional agent | Alkali metal phosphate | Sodium metaphosphate | | | | | | | | | | |
| pH adjustment functional agent | Alkali metal citrate | Monosodium citrate | | | | | | | | | | |
| pH adjustment functional agent | Alkali metal citrate | Disodium citrate | | | | | | | | | | |
| pH adjustment functional agent | Dicarboxylic acid | Malonic acid | | | | √ | | | | | | |
| pH adjustment functional agent | Dicarboxylic acid | Succinic acid | | | | | √ | | | | | |
| pH adjustment functional agent | Dicarboxylic acid | Glutaric acid | | | | | | √ | | | | |
| pH adjustment functional agent | Inorganic acid (oxoacid) | Sodium orthosilicate | | | | | | | | | | |
| pH adjustment functional agent | Inorganic acid (oxoacid) | Monosodium phosphate | | | | | | | √ | | | |
| pH adjustment functional agent | Hydroxy acid | Sodium glycolate | √ | | | | | | | √ | | |
| pH adjustment functional agent | Hydroxy acid | Sodium lactate | | √ | | | | | | | √ | |
| pH adjustment functional agent | Hydroxy acid | Sodium DL-malate | | | √ | | | | | | | √ |
| Metal-crosslinking thickening agent | Sodium alginate | | | √ | | | √ | | | √ | | |
| Metal-crosslinking thickening agent | Magnesium alginate | | √ | | | √ | | | √ | | | √ |
| Metal-crosslinking thickening agent | Potassium alginate | | | | √ | | | √ | | | √ | |
| Positive electrode active material | NCA | pH (example 1) | 7.5 | 7.7 | 7.9 | 7.5 | 7.2 | 7.4 | 7.2 | 7.7 | 7.6 | 7.3 |
| Positive electrode active material | NCA | Battery performance (Example 2) | S | S | A | S | S | A | S | S | S | S |
| Positive electrode active material | NMC622 | pH (Example 1) | 7.2 | 7.3 | 7.3 | 7 | 6.8 | 7 | 6.9 | 7.2 | 7.3 | 7 |
| Positive electrode active material | NMC622 | Battery performance (Example 2) | S | A | S | S | S | S | S | A | S | S |
| Positive electrode active material | NMC811 | pH (Example 1) | 8 | 8 | 8 | 7.6 | 7.3 | 7.7 | 7.4 | 7.3 | 7.4 | 7.4 |
| Positive electrode active material | NMC811 | Battery performance (Example 2) | A | A | S | S | S | S | A | S | S | S |

EP 3 879 610 A1

[Table 3]

| Production Example | | | 21 | 22 | 23 | 24 | 25 | 26 | 27 | 28 | 29 | 30 |
|---|---|---|---|---|---|---|---|---|---|---|---|---|
| pH adjustment functional agent | Gluconate | Potassium gluconate | | | | | | | | | | |
| | | Sodium gluconate | | | | | | | | | | |
| | Alkali metal phosphate | Disodium phosphate | | √ | √ | √ | √ | √ | √ | | | |
| | | Sodium polyphosphate | | | | | | | | √ | √ | √ |
| | | Sodium metaphosphate | | | | | | | | | | |
| | Alkali metal citrate | Monosodium citrate | | | | | | | | √ | | |
| | | Disodium citrate | | | | | | | | | | |
| | Dicarboxylic acid | Malonic acid | √ | | | | | | | | | |
| | | Succinic acid | | √ | | | | | | | √ | |
| | | Glutaric acid | | | √ | | | | | | | √ |
| | Inorganic acid (oxoacid) | Sodium orthosilicate | | | | | | | | | | |
| | | Monosodium phosphate | | | | √ | | | | | | |
| | Hydroxy acid | Sodium glycolate | | | | | √ | | | | | |
| | | Sodium lactate | | | | | | √ | | | | |
| | | Sodium DL-malate | | | | | | | √ | | | |
| Metal-crosslinking thickening agent | | Sodium alginate | √ | | | √ | | | √ | | | √ |
| | | Magnesium alginate | | √ | √ | | | √ | | | √ | |
| | | Potassium alginate | | | | | √ | | | √ | | |
| Positive electrode active material | NCA | pH (Example 1) | 7.7 | 7.5 | 7.3 | 7.3 | 7.2 | 7.2 | 7.5 | 7.4 | 7.2 | 7.3 |
| | | Battery performance (Example 2) | A | S | S | S | A | S | S | S | A | A |
| | NMC622 | pH (Example 1) | 7.2 | 7 | 7 | 7.2 | 7.2 | 6.8 | 7 | 7 | 7.2 | 7.2 |
| | | Battery performance (Example 2) | S | S | S | S | A | S | S | S | A | S |
| | NMC811 | pH (Example 1) | 7.2 | 7.7 | 7.5 | 7.5 | 7.6 | 7.3 | 7.4 | 7.5 | 7.4 | 7.5 |
| | | Battery performance (Example 2) | S | A | A | A | B | S | S | S | S | S |

[Table 4]

| | | | 31 | 32 | 33 | 34 | 35 | 36 | 37 | 38 | 39 | 40 |
|---|---|---|---|---|---|---|---|---|---|---|---|---|
| Production Example | | | 31 | 32 | 33 | 34 | 35 | 36 | 37 | 38 | 39 | 40 |
| pH adjustment functional agent | Gluconate | Potassium gluconate | | | | | | | | | | |
| | | Sodium gluconate | | | | | | | | | | |
| | Alkali metal phosphate | Disodium phosphate | | | | | | | | | | |
| | | Sodium polyphosphate | √ | √ | √ | √ | | | | | | |
| | | Sodium metaphosphate | | | | | √ | √ | √ | √ | √ | √ |
| | Alkali metal citrate | Monosodium citrate | | | | | | | | | | |
| | | Disodium citrate | | | | | | | | | | |
| | Dicarboxylic acid | Malonic acid | | | | | √ | | | | | |
| | | Succinic acid | | | | | | √ | | | | |
| | | Glutaric acid | | | | | | | √ | | | |
| | Inorganic acid (oxoacid) | Sodium orthosilicate | | | | | | | | | | |
| | | Monosodium phosphate | √ | | | | | | | √ | | |
| | Hydroxy acid | Sodium glycolate | | √ | | | | | | | √ | |
| | | Sodium lactate | | | √ | | | | | | | √ |
| | | Sodium DL-malate | | | | √ | | | | | | |
| Metal-crosslinking thickening agent | Sodium alginate | | | | √ | | | √ | | | √ | |
| | Magnesium alginate | | | √ | | | √ | | | √ | | |
| | Potassium alginate | | √ | | | √ | | | √ | | | √ |
| Positive electrode active material | NCA | pH (Example 1) | 7.6 | 7.2 | 7.6 | 7.6 | 7.2 | 7.5 | 7.5 | 7.6 | 7.4 | 7.6 |
| | | Battery performance (Example 2) | S | S | A | S | S | A | S | S | S | S |
| | NMC622 | pH (Example 1) | 7 | 7.1 | 7.2 | 6.9 | 7 | 7.1 | 7.1 | 7.2 | 6.8 | 6.9 |
| | | Battery performance (Example 2) | S | S | A | S | S | A | A | S | S | S |
| | NMC811 | pH (Example 1) | 7.5 | 7.3 | 7.6 | 7.7 | 7.5 | 7.4 | 7.6 | 7.6 | 7.5 | 7.7 |
| | | Battery performance (Example 2) | S | A | S | A | A | S | A | A | S | A |

EP 3 879 610 A1

22

[Table 5]

| | | | 41 | 42 | 43 | 44 | 45 | 46 | 47 | 48 | 49 | 50 |
|---|---|---|---|---|---|---|---|---|---|---|---|---|
| Production Example | | | 41 | 42 | 43 | 44 | 45 | 46 | 47 | 48 | 49 | 50 |
| pH adjustment functional agent | Gluconate | Potassium gluconate | | | | | | | | | | |
| | | Sodium gluconate | | | | | | | | | | |
| | Alkali metal phosphate | Disodium phosphate | | | | | | | | | | |
| | | Sodium polyphosphate | | | | | | | | | | |
| | | Sodium metaphosphate | √ | | | | | | | | | |
| | Alkali metal citrate | Monosodium citrate | | √ | √ | √ | √ | √ | √ | √ | | |
| | | Disodium citrate | | | | | | | | | √ | √ |
| | Dicarboxylic acid | Malonic acid | | √ | | | | | | | √ | |
| | | Succinic acid | | | √ | | | | | | | √ |
| | | Glutaric acid | | | | √ | | | | | | |
| | Inorganic acid (oxoacid) | Sodium orthosilicate | | | | | | | | | | |
| | | Monosodium phosphate | | | | | | √ | | | | |
| | Hydroxy acid | Sodium glycolate | | | | | | | √ | | | |
| | | Sodium lactate | | | | | | | | √ | | |
| | | Sodium DL-malate | √ | | | | | | | | √ | |
| Metal-crosslinking thickening agent | Sodium alginate | | | √ | | | √ | | | √ | | |
| | Magnesium alginate | | √ | | | √ | | | √ | | | √ |
| | Potassium alginate | | | | √ | | √ | | | | √ | |
| Positive electrode active material | NCA | pH (Example 1) | 7.3 | 7.1 | 7.2 | 6.9 | 6.6 | 7 | 6.9 | 6.9 | 6.9 | 6.8 |
| | | Battery performance (Example 2) | S | S | A | S | S | S | S | S | S | S |
| | NMC622 | pH (Example 1) | 6.8 | 6.4 | 6.7 | 6.3 | 6.6 | 6.7 | 7 | 6.5 | 6.1 | 6.3 |
| | | Battery performance (Example 2) | S | S | A | S | S | S | S | S | A | S |
| | NMC811 | pH (Example 1) | 7.5 | 6.8 | 7 | 7 | 6.5 | 7.1 | 6.6 | 6.7 | 6.7 | 6.4 |
| | | Battery performance (Example 2) | S | S | S | S | S | S | S | A | A | A |

EP 3 879 610 A1

23

[Table 6]

| Production Example | | | 51 | 52 | 53 | 54 | 55 |
|---|---|---|---|---|---|---|---|
| pH adjustment functional agent | Gluconate | Potassium gluconate | | | | | |
| | | Sodium gluconate | | | | | |
| | Alkali metal phosphate | Disodium phosphate | | | | | |
| | | Sodium polyphosphate | | | | | |
| | | Sodium metaphosphate | | | | | |
| | Alkali metal citrate | Monosodium citrate | | | | | |
| | | Disodium citrate | √ | √ | √ | √ | √ |
| | Dicarboxylic acid | Malonic acid | | | | | |
| | | Succinic acid | | | | | |
| | | Glutaric acid | √ | | | | |
| | Inorganic acid (oxoacid) | Sodium orthosilicate | | | | | |
| | | Monosodium phosphate | | √ | | | |
| | Hydroxy acid | Sodium glycolate | | | √ | | |
| | | Sodium lactate | | | | √ | |
| | | Sodium DL-malate | | | | | √ |
| Metal-crosslinking thickening agent | Sodium alginate | | √ | | | √ | |
| | Magnesium alginate | | | | √ | | |
| | Potassium alginate | | | √ | | | √ |
| Positive electrode active material | NCA | pH (Example 1) | 6.7 | 6.8 | 6.5 | 6.5 | 6.9 |
| | | Battery performance (Example 2) | S | A | S | S | S |
| | NMC622 | pH (Example 1) | 6.4 | 6.7 | 6.5 | 6.2 | 6.2 |
| | | Battery performance (Example 2) | S | A | S | S | S |
| | NMC811 | pH (Example 1) | 6.7 | 6.6 | 6.1 | 6.7 | 6.8 |
| | | Battery performance (Example 2) | S | A | S | S | S |

[Comparative Production Example 1]

2 parts by mass of polyvinylidene fluoride (EQ-Lib-PVdF, manufactured by MTI) as a binder, 95 parts by mass of NCA, NMC622, or NMC811 as a positive electrode active material, and 3 parts by mass of acetylene black as a conductive auxiliary agent were mixed together.

25 parts by mass of N-methyl-2-pyrrolidone as a nonaqueous solvent was added to the obtained mixture, the mixture was kneaded with use of a planetary mixer (T.K. HIVIS MIX, manufactured by PRIMIX Corporation), and thereby a slurry for formation of positive-electrode mix layer was prepared. The same methods as described in Production Example 1 were carried out using this slurry for formation of positive-electrode mix layer, and thereby a positive electrode for an electrochemical device and a negative electrode for an electrochemical device were prepared.

[Comparative Production Example 2]

The same methods as described in Comparative Production Example 1 were carried out using materials in the same amounts as described in Comparative Production Example 1, except that Alg-H (manufactured by FUJIFILM Wako Pure Chemical Corporation) was used as the binder instead of polyvinylidene fluoride and that water was used instead of N-methyl-2-pyrrolidone. In this way, a positive electrode for an electrochemical device and a negative electrode for an electrochemical device were prepared.

[Comparative Production Example 3]

2 parts by mass of polyvinyl pyrrolidone (PVP), 95 parts by mass of a positive electrode active material (NCA, NMC622, or NMC811), and 3 parts by mass of acetylene black were mixed together to obtain mixture 1. To the mixture 1, 1 mass% aqueous acetic acid solution was added and mixed so that the amount of the 1 mass% aqueous acetic acid solution would be 0.05 mass% of the total amount of the mixture 1 and the 1 mass% aqueous acetic acid solution. In this way, mixture 2 was obtained.

25 parts by mass of water was added to the mixture 2, the resulting mixture was kneaded with use of a planetary mixer (T.K. HIVIS MIX, manufactured by PRIMIX Corporation), and thereby a slurry for formation of positive-electrode mix layer was prepared. The same methods as described in Production Example 1 were carried out using this slurry for formation of positive-electrode mix layer, and thereby a positive electrode for an electrochemical device and a negative electrode for an electrochemical device were prepared.

[Comparative Production Example 4]

The same methods as described in Comparative Production Example 3 were carried out, except that mixture 3 prepared with use of 1 mass% aqueous formic acid solution instead of the 1 mass% aqueous acetic acid solution was used. In this way, a positive electrode for an electrochemical device and a negative electrode for an electrochemical device were prepared.

[Example 1]

(Measurement of pH of slurry for formation of positive-electrode mix layer in accordance with an embodiment of the present invention)

If the pH of a slurry for formation of positive-electrode mix layer in accordance with an embodiment of the present invention is basic, such a pH is not preferable because the pH causes corrosion of aluminum foil serving as a positive electrode substrate (positive electrode current collector). In view of this, the pH of each of the slurries for formation of positive-electrode mix layer prepared in Production Examples 1 to 55 and Comparative Production Examples 2 to 4 was checked. The aluminum foil corrodes when pH is equal to or higher than about 9.0; therefore, the pH of a slurry for formation of positive-electrode mix layer in accordance with an embodiment of the present invention should be less than 9.0.

In the present Example, the pH of each slurry for formation of positive-electrode mix layer was measured after 6 hours from the preparation thereof, with use of a pH meter (LAQUA twin, manufactured by HORIBA). The pH of each of the slurries for formation of positive-electrode mix layer prepared in Production Examples 1 to 55 is shown in the "pH" rows of Tables 1 to 6. The pH of each of the slurries for formation of positive-electrode mix layer obtained in Comparative Production Examples 2 to 4 is shown in the "pH" columns of Tables 8 to 10.

As shown in Tables 8 to 10, the slurries for formation of positive-electrode mix layer obtained in Comparative Production Examples 2 to 4 each had a pH higher than 10, which is strongly basic enough to corrode aluminum foil. On the contrary, as shown in Tables 1 to 6, the slurries for formation of positive-electrode mix layer obtained in Production Examples 1 to 77 each had a pH less than 9, and many of them were at or near neutral pH.

The results demonstrated that a slurry for formation of positive-electrode mix layer in accordance with an embodiment of the present invention, which include a binder in accordance with an embodiment of the present invention, thereby prevents an increase in pH because of the pH buffering effect provided by the binder, and that the slurry does not corrode aluminum foil even in cases where water is used as a solvent.

[Example 2]

(Discharge capacity maintaining ratio of lithium-ion secondary battery in accordance with an embodiment of the present invention)

< 1. Construction of lithium-ion secondary battery in accordance with an embodiment of the present invention>

A separator sheet (manufactured by UBE INDUSTRIES, LTD.) (which has a thickness of 20 $\mu$m and has a

three-layer structure compose of a polyethylene (PE) layer and two polypropylene (PP) layers disposed on both sides of the polyethylene (PE)) was disposed on each of the positive electrodes for electrochemical device prepared in Production Examples 1 to 55 and Comparative Production Examples 1 to 4, and metal lithium foil was disposed on the separator sheet to obtain a laminate. The obtained laminate was placed in a CR2302 coin cell case.

Into the coin cell case, a nonaqueous electrolyte was introduced. The nonaqueous electrolyte introduced is a nonaqueous electrolyte in which $LiPF_6$ as a supporting salt was dissolved at a concentration of 1.0 mol/L in a mixed solvent containing ethylene carbonate (EC) and dimethyl carbonate (DMC) at a volume ratio of EC:DMC = 1:1. Then, the coin cell case was sealed by application of pressure with use of a crimping device while a stainless-steel cap was placed on an insulating washer which was provided on a periphery of the coin cell case. In this way, a lithium-ion coin cell battery was constructed.

Each of the lithium-ion coin cell batteries obtained with use of the respective positive electrodes for the electrochemical device prepared in Production Examples corresponds to a lithium-ion secondary battery in accordance with an embodiment of the present invention. Hereinafter, such lithium-ion secondary batteries are referred to as "lithium-ion secondary batteries 1 to 55", respectively, and lithium-ion coin cell batteries obtained with use of the respective positive electrodes for the electrochemical device prepared in Comparative Production Examples 1 to 4 are referred to as "comparative lithium-ion secondary batteries 1 to 4".

<2. Measurement of discharge capacity characteristics maintenance ratio>

The slurries for formation of positive-electrode mix layer produced in Production Examples 1 to 55 contain water as a solvent, as described in the [2. Preparation of slurry for formation of positive-electrode mix layer] section of Production Example 1. On the other hand, the positive electrode active material used in the slurry for formation of positive-electrode mix layer is prone to hydrolysis, and therefore, particularly in a high-temperature environment (for example, in an environment in which the temperature around the cell is 60°C), battery characteristics may decrease. In view of this, discharge capacities of the lithium-ion secondary batteries 1 to 55 were compared with discharge capacity of the comparative lithium-ion secondary battery 1 (in which the slurry for the electrode was prepared with use of an organic solvent), and whether the discharge capacity decreased or not was checked.

First, each of the lithium-ion secondary batteries 1 to 55 and the comparative lithium-ion secondary batteries 1 to 4 was charged in a constant current-constant voltage mode (CC-CV mode). Note that in a CV mode, charging was ended at a point in time when an electric current value became a tenth of a value of a set electric current in a constant current mode (CC mode). Next, each of the lithium-ion secondary batteries 1 to 55 and the comparative lithium-ion secondary batteries 1 to 4 was discharged at 60°C at a constant current of one-hour rate (1.0C rate) (2.8 mA). The voltage range was 3.0 V to 4.3 V.

The discharge capacity characteristics maintenance ratio of each of the lithium-ion secondary batteries 1 to 55 relative to the discharge capacity of the comparative lithium-ion secondary battery 1 was calculated from the measured discharge capacities using the following equation (1).

$$\text{Discharge capacity characteristics maintenance ratio}$$
$$(\%) = (\text{discharge capacity of one of lithium-ion secondary}$$
$$\text{batteries 1 to 5}) / (\text{discharge capacity of comparative}$$
$$\text{lithium-ion secondary battery 1}) \times 100 \ ... \ \text{Equation (1)}$$

The discharge capacity characteristics maintenance ratio of each of the lithium-ion secondary batteries 1 to 55, where 100% represents the discharge capacity characteristics maintenance ratio of the comparative lithium-ion secondary battery 1 in this test, was evaluated based on the following criteria. Batteries evaluated as S and A, and B were regarded as acceptable, whereas batteries evaluated as C were regarded as unacceptable.

S: Difference from discharge capacity characteristics maintenance ratio of comparative lithium-ion secondary battery 1 is less than -1.0%.

A: Difference from discharge capacity characteristics maintenance ratio of comparative lithium-ion secondary battery 1 is not less than -1.0% and less than -3.0%.

B: Difference from discharge capacity characteristics maintenance ratio of comparative lithium-ion secondary battery 1 is not less than -3.0% and less than -5.0%.

C: Difference from discharge capacity characteristics maintenance ratio of comparative lithium-ion secondary battery 1 is not less than -5.0%.

The results of the evaluation of the discharge capacity characteristics maintenance ratios of the lithium-ion secondary batteries 1 to 55 are shown in the "Battery performance" rows of Tables 1 to 6. Furthermore, in Table 7, the discharge capacity of the comparative lithium-ion secondary battery 1 is shown in the "Measured discharge capacity" column. In Tables 8 to 10, the results obtained by evaluating the discharge capacity characteristics maintenance ratios of the comparative lithium-ion secondary batteries 2 to 4 (calculated by comparison with the discharge capacity of the comparative lithium-ion secondary battery 1 based on the equation (1)) are shown in the "Battery performance" columns.

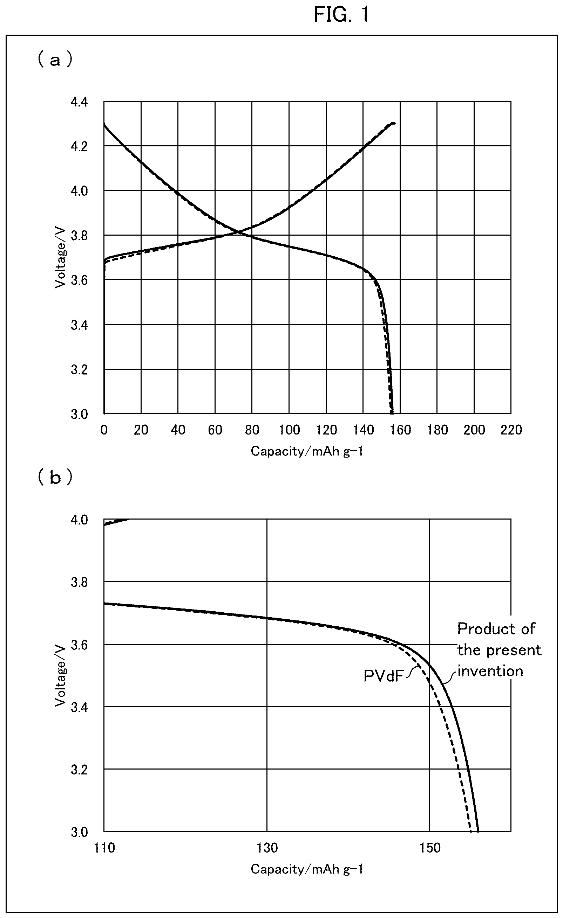

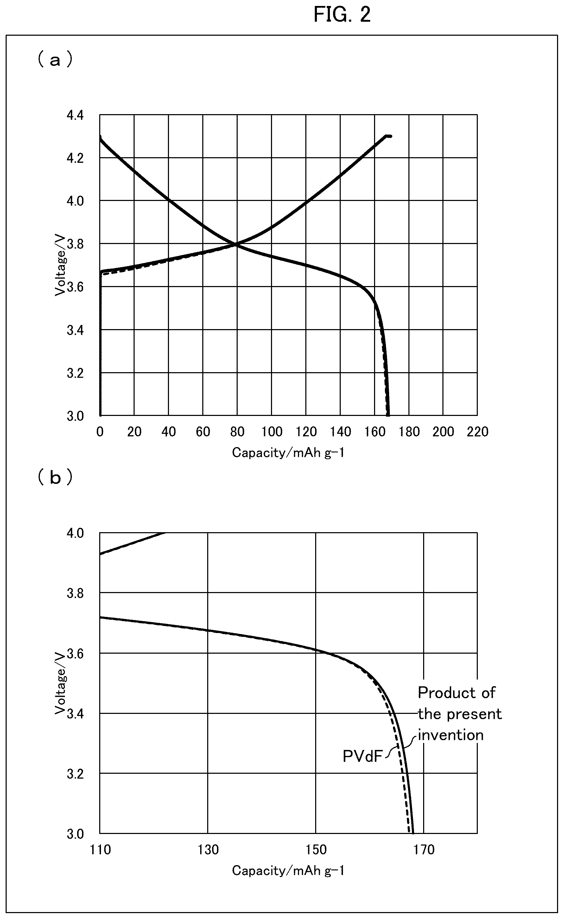

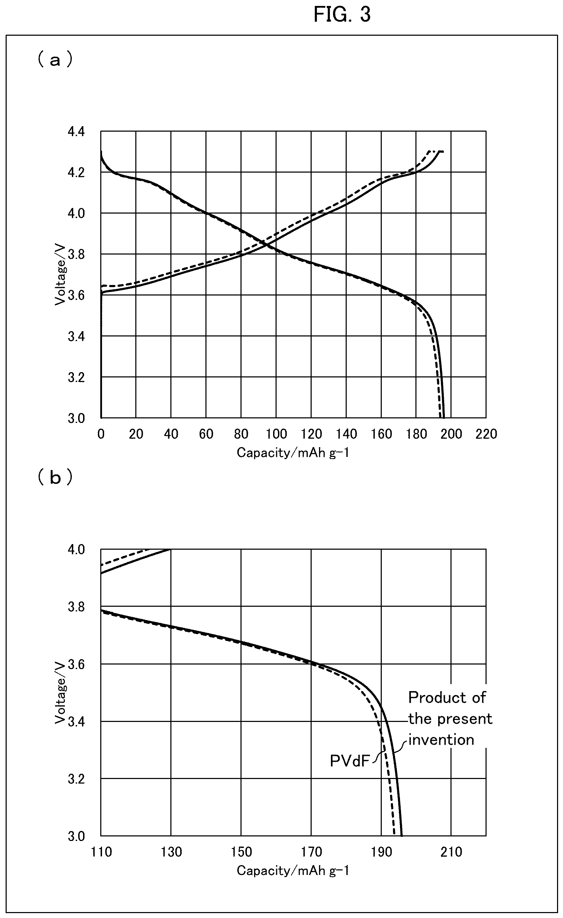

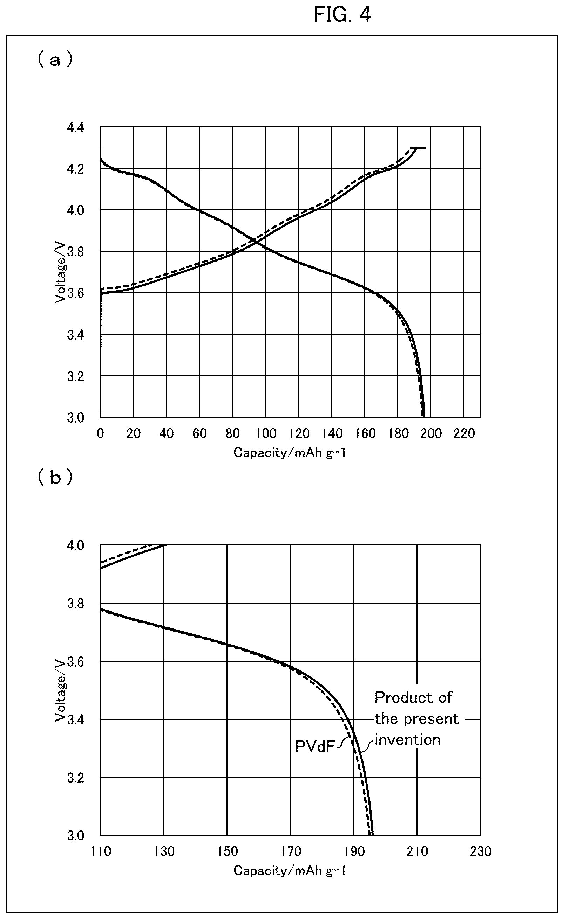

Furthermore, Figs. 1 to 4 each show charge and discharge curves obtained by carrying out charging and discharging of the lithium-ion secondary battery 1 in the manner as described earlier in the <2. Measurement of discharge capacity characteristics maintenance ratio> section with use of NMC532, NMC622, NMC811, or NCA as the positive electrode active material. (a) of each of Figs. 1 to 4 shows the entirety of the charge and discharge curves, and (b) of each of Figs. 1 to 4 is an enlarged view of a part of the entirety shown in (a). The horizontal axis indicates capacity, and the vertical axis indicates voltage.

[Table 7]

| Binder | Positive electrode active material | Measured discharge capacity (mAh/g) |
|---|---|---|
| PVdF | NCA | 195 |
| | NMC622 | 168 |
| | NMC811 | 193 |

[Table 8]

| Binder | Positive electrode active material | pH | Battery performance |
|---|---|---|---|
| AlgH | NCA | 11.5 | C |
| | NMC622 | 10.5 | C |
| | NMC811 | 11.2 | C |

[Table 9]

| Binder | Positive electrode active material | pH | Battery performance |
|---|---|---|---|
| PVP + Acetic acid | NCA | 11 | C |
| | NMC622 | 10.7 | C |
| | NMC811 | 11.1 | C |

[Table 10]

| Binder | Positive electrode active material | pH | Battery performance |
|---|---|---|---|
| PVP + Formic acid | NCA | 10.9 | C |
| | NMC622 | 10.2 | C |
| | NMC811 | 11 | C |

As shown in Tables 1 to 6 and Figs. 1 to 4, the lithium-ion secondary batteries 1 to 55 each showed a discharge capacity equivalent to that of the comparative lithium-ion secondary battery 1, irrespective of which of the high-nickel active materials NCA, NMC622, and NMC811 was used as the positive electrode active material.

The results can be interpreted as meaning that the lithium-ion secondary batteries 1 to 55, each of which includes a binder in accordance with an embodiment of the present invention, thereby prevented hydrolysis of the high-nickel active material caused by water contained in the slurry for the electrode in accordance with an embodiment of the present invention, even in cases where the high-nickel active material which is prone to hydrolysis was used as the positive electrode active material. The results can be interpreted as meaning that, as a result, the lithium-ion secondary batteries 1 to 55 sufficiently maintained the characteristics of the high-nickel active material and showed superior discharge capacities even in a high-temperature environment.

As such, it can be said that a binder in accordance with an embodiment of the present invention is very useful, because, with use of the binder, it is possible to prepare an electrode for an electrochemical device in accordance with an embodiment of the present invention without having to use an organic solvent (which is not preferred in view of safety, effects on the environment, handleability, and the like) and without causing hydrolysis of a high-nickel active material in an aqueous system, and possible to provide an electrochemical device which shows superior characteristics.

Note that, as shown in Tables 8 to 10, the comparative lithium-ion secondary batteries 2 to 4, in each of which a binder which is not the binder in accordance with an embodiment of the present invention was used and the slurry for formation of positive-electrode mix layer was prepared in an aqueous system, only showed a discharge capacity inferior to the comparative lithium-ion secondary battery 1.

[Example 3]

(Cycle characteristic of lithium-ion secondary battery in accordance with an embodiment of the present invention at high temperature)

<1. Construction of lithium-ion secondary battery in accordance with an embodiment of the present invention>

The positive electrode for the electrochemical device prepared using NCA as a positive electrode active material and the negative electrode for the electrochemical device, obtained in each of Production Examples 7, 24, and 53 and Comparative Production Example 1, were placed opposite from each other with a separator sheet between them. The separator sheet used here is a separator sheet (manufactured by UBE INDUSTRIES, LTD.) having a thickness of 20 μm and having a three-layer structure compose of a polyethylene (PE) layer and two polypropylene (PP) layers disposed on both sides of the polyethylene (PE). Such a stack of the positive electrode for the electrochemical device, the negative electrode for the electrochemical device, and the separator sheet was rolled into an oval shape, and thereby a rolled electrode was prepared.

Next, the rolled electrode was placed in a cell case in the shape of a cylinder. Into the cell case, a nonaqueous electrolyte was introduced. The nonaqueous electrolyte introduced is a nonaqueous electrolyte in which $LiPF_6$ as a supporting salt was dissolved at a concentration of 1.0 mol/L in a mixed solvent containing ethylene carbonate (EC) and dimethyl carbonate (DMC) at a volume ratio of EC:DMC = 1:1. Then, the positive electrode current collector and the negative electrode current collector exposed at the ends of the rolled electrode were welded with a positive electrode terminal and a negative electrode terminal, respectively, and then the opening of the cell case was sealed. In this way, a 18650 lithium-ion secondary battery was constructed.

The 18650 lithium-ion batteries obtained with use of the positive electrodes for the electrochemical device prepared in Production Examples 7, 24, and 53 each correspond to a lithium-ion secondary battery in accordance with an embodiment of the present invention. Such lithium-ion secondary batteries are hereinafter referred to as "lithium-ion secondary batteries 7a, 24a, and 53a", respectively, and a 18650 lithium-ion battery obtained with use of the positive electrode for the electrochemical device prepared in Comparative Production Example 1 is hereinafter referred to as "comparative lithium-ion secondary battery 1a".

<2. Measurement of cycle characteristic at high temperature>

In this Example, the cycle characteristics of lithium-ion secondary batteries in accordance with an embodiment of the present invention in a high-temperature environment were examined in comparison with the comparative lithium-ion secondary battery 1a for which the slurry for the electrode was prepared with use of an organic solvent.

First, each of the lithium-ion secondary batteries 7a, 24a, and 53a and the comparative lithium-ion secondary battery 1a was charged in a constant current-constant voltage mode (CC-CV mode). Note that in a CV mode, charging was ended at a point in time when an electric current value became a tenth of a value of a set electric current in a constant current mode (CC mode). Next, each of the lithium-ion secondary batteries 7a, 24a, and 53a and the comparative lithium-ion secondary battery 1a was discharged at 60°C at a constant current of one-hour rate (1.0C rate) (2000 mA). The voltage range was 3.0 V to 4.3 V. One-hundred cycles of these steps were carried out.

The discharge capacity characteristics maintenance ratio of each battery was calculated by substituting the discharge capacity measured in each cycle into the following equation (2).

$$\text{Discharge capacity characteristics maintenance ratio (\%)} = \text{(discharge capacity value in initial cycle)} / \text{(discharge capacity value in each cycle)} \times 100 \ldots \text{Equation (2)}$$

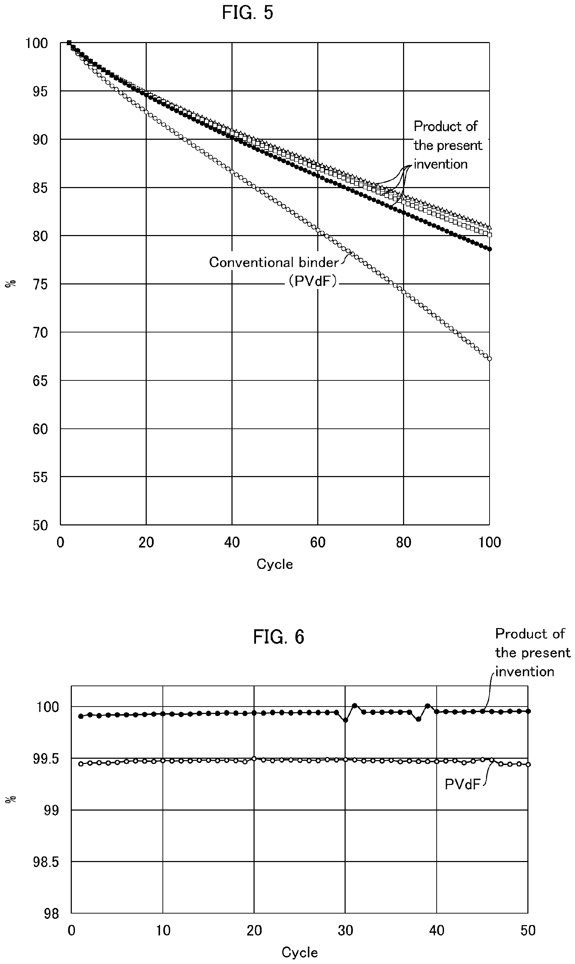

The results are shown in Fig. 5. Fig. 5 is a chart showing how discharge capacity characteristics maintenance ratio changes from the first cycle to the 100th cycle. In Fig. 5, the "product of the present invention" indicates the results on the lithium-ion secondary batteries in accordance with an embodiment of the present invention. The graph in which the discharge capacity characteristics maintenance ratios in the respective cycles are represented by triangles shows the results on the lithium-ion secondary battery 53a, the graph in which the discharge capacity characteristics maintenance ratios in the respective cycles are represented by squares shows the results on the lithium-ion secondary battery 7a, and the graph in which the discharge capacity characteristics maintenance ratios in the respective cycles are represented by filled circles shows the results on the lithium-ion secondary battery 24a. The "conventional binder (PVdF)" indicates the results on the comparative lithium-ion secondary battery 1a.

In the test of this Example, when the discharge capacity characteristics maintenance ratio of a battery is less than 80%, it is determined that the life of the battery has expired. As shown in Fig. 5, the discharge capacity characteristics maintenance ratio of the comparative lithium-ion secondary battery 1a reached 80% in the 60th cycle, and continued to rapidly decrease.

In contrast, each of the lithium-ion secondary batteries 7a, 24a, and 53a showed a discharge capacity characteristics maintenance ratio higher than 85%, which is much higher than that of the comparative lithium-ion secondary battery 1a, in the 60th cycle. The discharge capacity characteristics maintenance ratio of each of the lithium-ion secondary batteries 7a, 24a, and 53a did not decrease to 80% before the end of the 90th cycle or before reaching the 100th cycle. That is, it was confirmed that a lithium-ion secondary battery in accordance with an embodiment of the present invention shows very good cycle characteristics at high temperature.

In a high-temperature environment of 60°C, the thermal stability of the binder is directly linked to the life of the electrochemical device. It appears that the results shown in Fig. 5 are attributed to the thermal stability of the binder in accordance with an embodiment of the present invention which is better than the thermal stability of the PVdF (conventional binder).

[Example 4]

(High-voltage endurance (endurance to high voltage) of lithium-ion secondary battery in accordance with an embodiment of the present invention)

<1. Construction of lithium-ion secondary battery in accordance with an embodiment of the present invention>

The same methods as described in Production Example 4 were carried out, except that LMN was used as a positive electrode active material. In this way, a binder, a slurry for formation of positive-electrode mix layer, and a positive electrode for an electrochemical device were prepared. The same method as described in Example 2 was carried out to prepare a lithium-ion coin cell battery.

The lithium-ion coin cell battery is hereinafter referred to as "lithium-ion secondary battery 10b". The lithium-ion secondary battery 10b corresponds to a lithium-ion secondary battery in accordance with an embodiment of the present invention.

Furthermore, the same methods as described in Comparative Production Example 1 were carried out, except that LMN was used as a positive electrode active material. In this way, a binder, a slurry for formation of positive-electrode mix layer, and a positive electrode for an electrochemical device were prepared. The same method as described in Example 2 was carried out to prepare a lithium-ion coin cell battery. The lithium-ion coin cell battery is hereinafter referred to as "comparative lithium-ion secondary battery 1b".

<2. Comparison of endurance to high voltage>

In this Example, the endurance to high voltage of a lithium-ion secondary battery in accordance with an embodiment of the present invention was examined in comparison with the comparative lithium-ion secondary battery 1b for which the slurry for the electrode was prepared with use of an organic solvent.

First, the lithium-ion secondary battery 10b and the comparative lithium-ion secondary battery 1b were each charged in a constant current-constant voltage mode (CC-CV mode). Note that in a CV mode, charging was ended at a point in time when an electric current value became a tenth of a value of a set electric current in a constant current mode (CC mode). Next, the lithium-ion secondary battery 10b and the comparative lithium-ion secondary battery 1b were each discharged at 60°C at a constant current of one-hour rate (1.0C rate) (1.86 mA). The voltage range was 3.5 V to 4.9 V. Fifty cycles of these steps were carried out.

The coulombic efficiency for each of the 50 cycles was calculated by substituting the charge capacity and the discharge capacity measured in each cycle into the following equation (3). The results were plotted on a chart in which the horizontal axis indicates cycle and the vertical axis indicates coulombic efficiency.

$$\text{Coulombic efficiency (\%)} = \text{(discharge capacity value in each cycle)} \,/\, \text{(charge capacity value in each cycle)} \times 100 \ldots \text{Equation (3)}$$

The results are shown in Fig. 6. Fig. 6 is a chart showing how coulombic efficiency changes from the first cycle to the 50th cycle. In Fig. 6, the "product of the present invention" indicates the results on the lithium-ion secondary battery 10b, and the "PVdF" indicates the results on the comparative lithium-ion secondary battery 1b.

This Example is a comparative test on electrodes including LMN as a positive electrode active material, which operate at a high potential of 4.9V vs. Li/Li$^+$. A potential of 4.9 V is a potential at which most binders undergo oxidative decomposition. At such a potential, the charge/discharge efficiency (coulombic efficiency) of a battery using a conventional binder generally tends to decrease.

As shown in Fig. 6, the lithium-ion secondary battery 10b shows a coulombic efficiency about 0.4% higher than that of the comparative lithium-ion secondary battery 1b whose binder is PVdF.

Specifically, it is inferred that, in the comparative lithium-ion secondary battery 1b, PVdF gradually decomposed as the cycles at high voltage proceeded. On the contrary, the lithium-ion secondary battery 10b showed a coulombic efficiency of substantially 100%, and the binder appears to have not decomposed. It therefore can be said that the lithium-ion secondary battery 10b has great endurance to high voltage.

[Example 5]

(Determination of whether or not transition metal has been eluted into solvent of slurry for electrode)

2 parts by mass of the binder prepared in Production Example 7, 95 parts by mass of NMC532 (which is a positive electrode active material), and 3 parts by mass of acetylene black were mixed together to obtain mixture 4.

To the obtained mixture 4, water was added so that the solid content would be 70 mass%, and the resulting mixture was kneaded with use of a planetary mixer (T.K. HIVIS MIX, manufactured by PRIMIX Corporation). In this way, a slurry for formation of positive-electrode mix layer (slurry for electrode) was prepared. The slurry for formation of positive-electrode mix layer, in accordance with an embodiment of the present invention, is hereinafter referred to as "slurry for electrode 1".

Furthermore, the following control slurries were prepared: comparative slurry 1 prepared in the same manner as the slurry for electrode 1 except that 2 parts by mass of polyvinyl pyrrolidone (PVP) was used instead of the binder prepared in Production Example 7; comparative slurry 2 prepared in the same manner as the slurry for electrode 1 except that the mixture 2 used in Comparative Production Example 3 was used instead of the mixture 4; and comparative slurry 3 prepared in the same manner as the slurry for electrode 1 except that the mixture 3 used in Comparative Production Example 4 was used instead of the mixture 4. The positive electrode active material used to prepare each of the comparative slurries 1 to 3 is the same as the positive electrode active material used to prepare the slurry for electrode 1.

The test to determine whether or not a transition metal(s) has(have) eluted into the slurry for electrode 1 and the comparative slurries 1 to 3 was carried out by inductively coupled plasma-optical emission spectroscopy in the following manner. The measurement was carried out with use of a high-frequency inductively coupled plasma-optical emission spectrometer (ICP-OES) (SPS-3520, manufactured by SII Nano Technology Inc.)

The slurry for electrode 1 and the comparative slurries 1 to 3 were each subjected to filtration using filter paper (ADVANTEC No. 4A), and transition metals (manganese, cobalt, and nickel) in the obtained filtrate were detected with use of ICP-OES. In so doing, the filtrate was 1000-fold diluted with ultrapure water before used in the measurement, because the filtrate in undiluted form has a transition metal concentration that is much greater than the detection limit.

The results are shown in Table 11. Each of the concentrations shown in Table 11 is the concentration in the undiluted filtrate (the value obtained by multiplying the detected value by 1000).

[Table 11]

|  | Binder | Ni | Mn | Co |
|---|---|---|---|---|
| Comparative Slurry1 | PVP | 0.14 | 0.17 | 0.12 |
| Comparative Slurry2 | PVP + Acetic acid | 317.59 | 288.05 | 313.95 |
| Comparative Slurry3 | PVP + Formic acid | 704.25 | 642.17 | 706.65 |
| Slurry for electrode 1 | Production Example 7 | 0 (less than detection limit) | 0.03 | 0 (less than detection limit) |

(Unit: ppm)

The PVP of the comparative slurry 1 corresponds to the binder used in the slurry for electrode 1, the PVP and the 1 mass% aqueous acetic acid solution of the comparative slurry 2 correspond to the binder used in the slurry for electrode 1, and the PVP and the 1 mass% aqueous formic acid solution of the comparative slurry 3 correspond to the binder used in the slurry for electrode 1.

Table 11 shows that, with regard to the comparative slurries 2 and 3 in which an acid is contained, large amounts of transition metals have been eluted into the slurry. Since the comparative slurries 2 and 3 do not contain the binder in accordance with an embodiment of the present invention and contain water as a solvent, the slurries are basic. The acetic acid and formic acid have been added to control the pH of the slurries; however, such acids have caused elution of large amounts of transition metals. It is apparent from this that the positive electrode active materials are damaged.

The comparative slurry 1 does not contain an acid, and therefore only small amounts of transition metals have been eluted. On the contrary, the slurry for electrode 1 has prevented the elution of transition metals to a greater extent than the comparative slurry 1. It therefore can be said that the use of the binder in accordance with an embodiment of the present invention makes it possible to sufficiently prevent the hydrolysis of the positive electrode active material.

Industrial Applicability

The present invention relates to a binder which is a material of an electrochemical device. The present invention can be broadly applied in, for example, industries of capacitors, automobiles, batteries, home appliances, etc.

**Claims**

1. A binder which connects electrode materials of an electrochemical device, the binder comprising:

   a pH adjustment functional agent which neutralizes a base in an aqueous system; and
   a metal-crosslinking thickening agent forming a hydrophobic gel by being crosslinked, in the aqueous system, via metal ions derived from an electrode active material.

2. The binder as set forth in claim 1, wherein the pH adjustment functional agent is at least one compound selected from the group consisting of: gluconates; alkali metal phosphates, and alkali metal citrates; dicarboxylic acids and salts thereof; oxoacids which are weakly acidic, and salts thereof; hydroxy acids and salts thereof; and alginic acids (Alg-H),
   the alginic acids (Alg-H) being alginic acids in which a carbonyl group is not bound to any cation except for a proton.

3. The binder as set forth in claim 1 or 2, wherein the metal-crosslinking thickening agent is at least one compound selected from the group consisting of watersoluble alginates, alginic acid esters, karaya gum, carrageenan, pectin, gellan gum, glucomannan, locust bean gum, xanthan gum, glucose, carboxymethyl starch, carboxymethyl cellulose and a salt thereof, hydroxyethyl cellulose, hydroxypropyl methylcellulose, mannose, galactose, arabinose, fucose, ribose, fructose, dextran, and hyaluronic acid.

4. The binder as set forth in any one of claims 1 to 3, wherein the binder comprises the pH adjustment functional agent in an amount of not less than 15 mass% and not more than 95 mass% and the metal-crosslinking thickening agent in an amount of not less than 5 mass% and not more than 85 mass%, the total mass of the pH adjustment functional agent and the metal-crosslinking thickening agent being 100 mass%.

5. The binder as set forth in any one of claims 1 to 4, wherein the electrode active material is an alkali metal complex oxide.

6. The binder as set forth in claim 5, wherein the alkali metal complex oxide is a complex oxide whose composition is represented by $Li_{1+u}Ni_{1-x-y-z}Co_xMn_yM_zO_2$, where M is at least one element selected from the group consisting of Fe, V, Mg, Al, Ti, Mo, Nb, Zr, and W, and where

$$-0.05 \leq u \leq 0.50,$$
$$0 \leq x \leq 0.35,$$
$$0 \leq y \leq 0.35,$$
$$0 \leq z \leq 0.1, \text{ and}$$
$$0 \leq x+y+z \leq 0.7.$$

7. A binder-containing liquid comprising:

a binder as recited in any one of claims 1 to 6; and
water or a water-containing hydrophilic organic solvent.

8. A binder-containing liquid comprising:

a binder as recited in any one of claims 1 to 6; and
an emulsion of a polyacrylic acid copolymer resin, an emulsion of a styrene-butadiene copolymer rubber, an emulsion of a fluorine-containing copolymer, or an aqueous dispersion of a fluorine-containing copolymer.

9. The binder-containing liquid as set forth in claim 7 or 8, further comprising a conductive auxiliary agent.

10. A composition comprising:

a binder as recited in any one of claims 1 to 6; and
a polyacrylic acid copolymer resin, a styrene-butadiene copolymer rubber, or a fluorine-containing copolymer.

11. The composition as set forth in claim 10, further comprising a conductive auxiliary agent.

12. A slurry for an electrode, comprising:

a binder as recited in any one of claims 1 to 6;
an electrode active material;
a conductive auxiliary agent; and
water.

13. The slurry for an electrode as set forth in claim 12, which has a solid content concentration of not less than 30 mass% and less than 100 mass%.

14. An electrode for an electrochemical device, comprising:

a binder as recited in any one of claims 1 to 6; or
a composition as recited in claim 10 or 11.

15. An electrochemical device comprising:

a positive electrode;
a negative electrode; and
an electrolyte between the positive electrode and the negative electrode,
the positive electrode and/or the negative electrode being an electrode for an electrochemical device as recited in claim 14.

16. The electrochemical device as set forth in claim 15, wherein the electrochemical device is a lithium-ion secondary battery.

## FIG. 1

(a)

(b)

FIG. 2

（a）

（b）

Product of
the present
invention

PVdF

## FIG. 3

(a)

(b)

## FIG. 4

（ａ）

（ｂ）

## FIG. 5

## FIG. 6

## INTERNATIONAL SEARCH REPORT

| International application No. |
|---|
| PCT/JP2019/018068 |

**A. CLASSIFICATION OF SUBJECT MATTER**
Int. Cl. H01M4/62(2006.01)i

According to International Patent Classification (IPC) or to both national classification and IPC

**B. FIELDS SEARCHED**

Minimum documentation searched (classification system followed by classification symbols)
Int. Cl. H01M4/62

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-089411 A (NIPPON ZEON CO., LTD.) 10 May 2012, claims, paragraphs [0017], [0027], [0046]-[0054], [0065]-[0069], [0074], examples (Family: none) | 1-16 |
| X | JP 2004-259515 A (YUASA BATTERY CO., LTD.) 16 September 2004, claims, paragraphs [0029], [0030], [0034], examples (Family: none) | 1-4, 7, 14-15 |
| Y | | 8-13 |
| Y | JP 10-144309 A (JAPAN STORAGE BATTERY CO., LTD.) 29 May 1998, claims, paragraphs [0003], [0039], [0042] (Family: none) | 8-13 |
| A | JP 08-222225 A (SANYO CHEMICAL INDUSTRIES, LTD.) 30 August 1996, entire text & EP 726607 A1 | 1-16 |

☒ Further documents are listed in the continuation of Box C.   ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 28.06.2019 | 09.07.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/018068

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2016/052715 A1 (KANSAI UNIVERSITY) 07 April 2016, entire text & US 2017/0309410 A1 & EP 3203558 A1 & KR 10-2017-0068492 A | 1-16 |
| A | WO 2016/186076 A1 (TOPPAN PRINTING CO., LTD.) 24 November 2016, entire text & US 2018/0069242 A1 & EP 3300148 A1 & CN 107615534 A & KR 10-2018-0011113 A | 1-16 |
| A | JP 2016-029630 A (NIPPON ZEON CO., LTD.) 03 March 2016, entire text (Family: none) | 1-16 |
| A | JP 2014-096238 A (FUJI HEAVY INDUSTRIES LTD.) 22 May 2014, entire text (Family: none) | 1-16 |
| A | JP 2016-219358 A (JSR CORP.) 22 December 2016, entire text (Family: none) | 1-16 |

Form PCT/ISA/210 (continuation of second sheet) (January 2015)

**EP 3 879 610 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016052715 A